# EUROPEAN PATENT SPECIFICATION

(11) **EP 2 518 946 B1**
(45) Date of publication and mention of the grant of the patent: **18.07.2018**
(21) Application number: 12160759.2
(22) Date of filing: 22.03.2012
(51) Int. Cl.: H04L 12/24, H04L 12/26

(54) **Device management system**
System zur Geräteverwaltung
Système de gestion de dispositif

(30) Priority: 14.04.2011 US 201113086608
(43) Date of publication of application: 31.10.2012
(73) Proprietor: Ricoh Company, Ltd., Tokyo 143-8555 (JP)
(72) Inventor: Tanaka, Shun, Tokyo, 143-8555 (JP)
(74) Representative: Schwabe - Sandmair - Marx

(56) References cited:
- EP-A2- 0 944 278
- US-A1- 2009 041 026
- US-B1- 6 493 755
- "3rd Generation Partnership Project; Technical Specification Group Services and System Aspects; Telecommunication management; Principles and high level requirements (Release 10)", 3GPP STANDARD; 3GPP TS 32.101, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.0.0, 8 October 2010 (2010-10-08), pages 1-65, XP050461888, [retrieved on 2010-10-08]

## Description

### TECHNICAL FIELD

This disclosure relates to systems, apparatuses, methodologies, computer program products, etc., for managing a plurality of information technology devices connected to a network.

### BACKGROUND

In the current information age, information technology (IT) tools are extensively used in enterprises and other organizations in order to facilitate processing of documents and data. IT administrators typically have the responsibilities of monitoring and managing IT assets, such as computers, printers, scanners, multi-function devices (MFDs) and other network-connected or standalone devices.

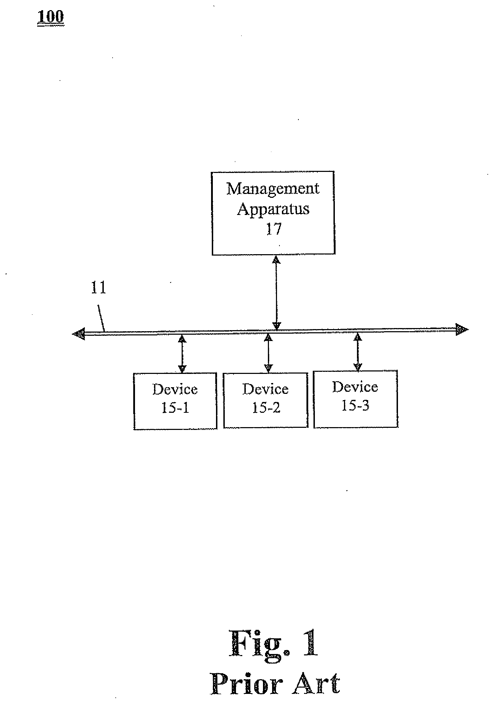

IT management tools (such as a management apparatus, management application software, etc.) are available to IT administrators to assist the administrators with performing their duties. For example, Fig. 1 illustrates a system 100, wherein the management apparatus 17 is provided for managing the network 11 and the network devices 15-1 through 15-3 connected to the network 11. The management apparatus 17 may monitor the network, and receive status updates and alert notifications from the network devices 15-1 through 15-3.

There is a drawback, however, in that the number of IT devices connected to a network is generally increasing and, as a result, an IT administrator is required to oversee a growing number of IT assets. Conventional management systems, such as the management apparatus 17 illustrated in Fig. 1, may be ill-equipped to manage a large number of IT devices. For example, a large number of IT devices may lead to a high volume of status updates, alert notifications and other data being transmitted through the network 11, and the management apparatus may not be efficient at handling such data, thereby affecting the ability of the administrator to efficiently manage the IT environment.

There exists a need for an improved system for managing a plurality of information technology devices connected to a network.

3rd Generation Partnership Project; Technical Specification Group Services and System Aspects; Telecommunication management; Principles and high level requirements (Release 10)", 3 GPP STANDARD; 3GPP TS 32.101, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, no. V10.0.0, 8 October 2010 (2010-10-08), pages 1-65, XP050461888, [retrieved on 2010-10-08] pertains to a system for managing device data of devices in a network environment. US 6,493,755 B1 discloses a network management application providing notification of events on network devices using prepopulated notification rules. The notification rule is prepopulated by the network management application using conditions that represent the present state of the device being monitored. An associated notification action is executed when an event on a network device satisfies the conditions of the prepopulated notification rule. The notification action can be tested without actually creating a set of conditions for a device that satisfies the conditions of the notification rule.

The present invention is defined by the subject matter of the appended claims.

In an aspect of this disclosure, there is provided a tool (for example, a system, an apparatus, application software, etc.) to an information technology (IT) administrator, to help with management of IT assets in a networked IT system, wherein each of at least one device management unit collects device data from a corresponding plurality of network devices, and manages the network devices according to a management policy specific to the device management unit.

In another aspect of this disclosure, there is provided a core management unit that manages and maintains persistent data collected in a network environment, the persistent data including device data collected by one or more device management units from one or more network devices.

In another aspect, the management policy specific to the device management unit is managed and registered by the core management unit, and each management policy is communicated to the corresponding device management unit.

In another aspect, the device management unit communicates the collected device data to the core management unit when the core management unit is available, and when the core management unit is not available, the device management unit continues to operate to collect device data and cache the collected device data.

In another aspect, when the collected device data is communicated from the device management unit to the core management unit, the communicated device data is flushed from the device management unit.

In another aspect, each device management unit registers the management policy specific to that device management unit, and when the core management unit is available after being unavailable, the device management unit resynchronizes the registered management policy with the management policy maintained by the core management unit for the device management unit.

In another aspect, each device management unit caches, for each network device managed by the device management unit, only a most recent instance of the device data collected by the device management unit from the network device.

In another aspect, an administrative user interface allows setting a configuration and/or management policy of each device management unit. The administrative user interface allows assigning a specific one of the device management units to manage a specific network device.

In another aspect, the core management unit registers code executable by, and available for upload to, the network devices. Each device management unit receives from the core management unit device code information indicating for each network device (amongst the network devices managed by the device management unit) code registered for the network device.

In another aspect, the device data collected from a network device includes configuration information, error history and usage history of the network device.

In another aspect, the device management unit polls the corresponding plurality of network devices to obtain the device data from the network devices.

In another aspect, the device management unit discovers the corresponding plurality of network devices, and obtains the device data from the network devices.

### BRIEF DESCRIPTION OF THE DRAWINGS

The aforementioned and other aspects, features and advantages can be more readily understood from the following detailed description with reference to the accompanying drawings wherein:
Fig. 1 shows a block diagram of a conventional system including a management apparatus;
Fig. 2 shows a block diagram of a system for managing networked devices, according to an exemplary embodiment;
Figs. 3A and 3B illustrate examples of device data collected by device management units, such as depicted in Fig. 2;
Fig. 4 illustrates an example of a management policy specific to a device management unit, such as depicted in Fig. 2;
Fig. 5 shows an example of a table registering persistent data managed and maintained by a core management unit, such as depicted in Fig. 2;
Fig. 6 shows an example of a table registering management policies that is stored in a configuration database, such as depicted in Fig. 2;
Fig. 7 shows a block diagram of an exemplary configuration of a computer that can be configured (for example, through appropriate programming) to implement a device management unit and/or core management unit, such as illustrated in Fig. 2;
Fig. 8 shows a block diagram of an exemplary configuration of a multi-function device, such as illustrated in Fig. 2;
Fig. 9A shows a flowchart of a method performed by a device management unit or a core management unit, such as illustrated in Fig. 2, according to an exemplary embodiment;
Fig. 9B shows a flowchart of a method performed by a device management unit, such as illustrated in Fig. 2, according to an exemplary embodiment;
Fig. 9C shows a flowchart of a method performed by a core management unit, such as illustrated in Fig. 2, according to an exemplary embodiment;
Fig. 10 illustrates an example of a more detailed configuration of a device management unit, such as depicted in Fig. 2, according to another exemplary embodiment;
Fig. 11 shows a flowchart of a method performed by a device management unit, such as illustrated in Fig. 10, according to another exemplary embodiment;
Fig. 12 shows a flowchart of a method performed by a device management unit, such as illustrated in Fig. 10, according to another exemplary embodiment;
Fig. 13 illustrates an example of a more detailed configuration of a core management unit, such as depicted in Fig. 2, according to another exemplary embodiment;
Figs. 14A through 14C illustrate examples of user interface screens, according to another exemplary embodiment;
Fig. 15 shows an example of a table in which device code information maintained by a core management unit (such as depicted in Fig. 13) is registered;
Fig. 16A shows a flowchart of a method performed by a core management unit, such as illustrated in Fig. 13, according to an exemplary embodiment;
Fig. 16B shows a flowchart of a method performed by a device management unit, such as illustrated in Fig. 2, according to an exemplary embodiment;
Figs. 17A and 17B show block diagrams of systems for managing networked devices, according to additional exemplary embodiments; and
Figs. 18A through 18C show block diagrams of systems for managing networked devices, according to exemplary embodiments; and
Fig. 19 shows a block diagram of a system for managing devices, according to another exemplary embodiment.

### DETAILED DESCRIPTION

In describing preferred embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner. In addition, a detailed description of known functions and configurations will be omitted when it may obscure the subject matter of the present invention.

Referring now to the drawings, wherein like reference numerals designate identical or corresponding parts throughout the several views, there is described tools (systems, apparatuses, methodologies, computer program products, etc.) for managing information technology devices, such as computers, printers, scanners, multi-function devices, and other network-connected, or standalone devices, and for managing one or more networks to which a plurality of such information technology devices are connected.

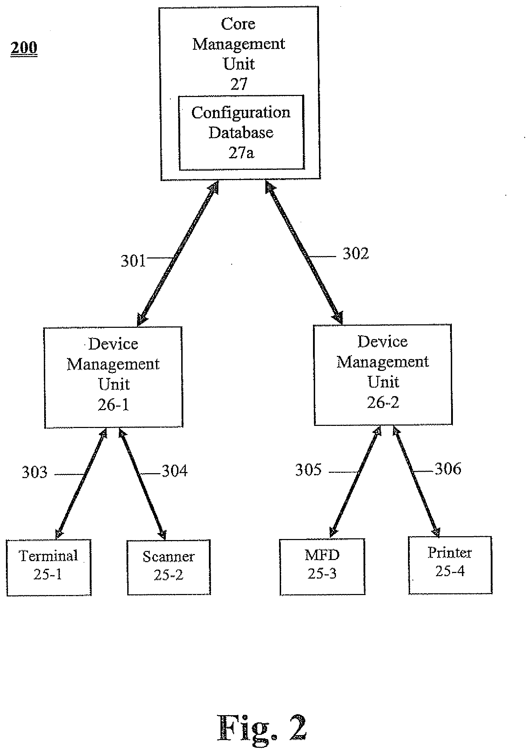

For example, Fig. 2 shows schematically a system 200 for managing a plurality of devices connected to one or more networks, according to an exemplary embodiment. System 200 includes a plurality of network devices (i.e. network-connected devices) 25-1 through 25-4, one or more device management (DM) servers or units 26-1 and 26-2, and a core management server or unit 27. The network devices in Fig. 2 include, for example, a terminal 25-1, scanner 25-2, multi-function device (MFD) 25-3 and printer 25-4. While the examples of this disclosure will simply refer to network devices 25-1 through 25-4 in the interests of brevity, the aspects of this disclosure are applicable to a network having an arbitrary number of devices 25-1...25-n. The core management unit 27 and the DM unit 26-1 are interconnected via network connection 301, and the core management unit 27 and the DM unit 26-2 are interconnected via network connection 302. The DM unit 26-1 and terminal 25-1 are interconnected via network connection 303, and the DM unit 26-1 and scanner 25-2 are interconnected via network connection 304. The DM unit 26-2 and MFD 25-3 are interconnected via network connection 305, and the DM unit 26-2 and printer 25-4 are interconnected via network connection 306.

The device management units 26-1 and 26-2 are configured to manage the network devices 25-1 through 25-4 and collect device data from the network devices 25-1 through 25-4. In particular, each of the device management units 26-1 and 26-2 may be responsible for managing and collecting device data from an assigned subset of the network devices 25-1 through 25-4. In the example of Fig. 2, the device management unit 26-1 manages and collects device data from network devices 25-1 and 25-2, and the device management unit 26-2 manages and collects device data from network devices 25-3 and 25-4.

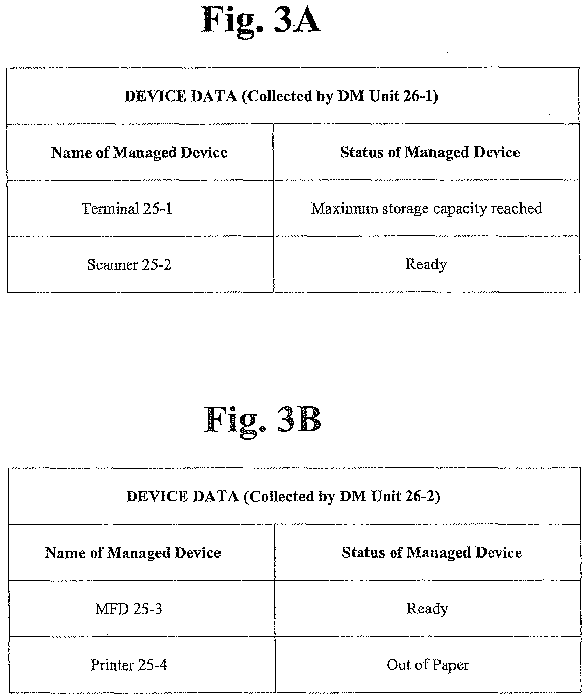

An example of device data collected by DM unit 26-1 from the network devices 25-1 and 25-2 is illustrated in Fig. 3A. As seen in Fig. 3A, the device data for each managed network device may include a name/identifier of the managed device, such as the name 'Terminal 25-1' or 'Scanner 25-2', and a status of the managed device, such as 'Maximum storage capacity reached' or 'Ready'. Similarly, an example of device data collected by DM unit 26-2 from the network devices 25-3 and 25-4 is illustrated in Fig. 3B. As seen in Fig. 3B, the device data for each managed network device may include a name/identifier of the managed device, such as the name 'MFD 25-3' or 'Printer 25-4', and a status of the managed device, such as 'Ready' or 'Out of Paper'.

The information depicted in Figs. 3A and 3B is merely exemplary, and other network devices, device status information, device properties, device configuration information, and so forth, may be included in the device data collected by the data management units. As non-limiting examples, the device data may instead or in addition specify one or more of the following for a given managed network device: device manufacturer; device model; device serial number; device type (printer, scanner, terminal, etc.); device location (physical address, geographic address, network address, IP address, MAC address, etc.); output technology (e.g., laser, inkjet solid ink, thermal, other technology, etc.); device location type (e.g., production/copy center, in a specific workgroup area, etc.); scope (e.g., within the scope of administrative responsibility of a particular IT administrator, outside the scope of administrative responsibility of particular IT administrator, etc.); connection type (e.g., network connected, workstation/local connected, non-connected, etc.); device age (e.g., < 1 year, 1-2 years, 2-3 years, 3-4 years, 4-5 years, > 5 years, etc.); functions (e.g., copy, fax, print, scan, copy/scan, copy/fax, copy/print, print/fax, print/scan, copy/print/fax, copy/print/scan, copy/print/fax/scan, etc.); firmware version (e.g., major version, minor version, etc.); installed applications (e.g., application name, major version, etc.); organization (e.g., different groups, sub-groups, levels, departments, divisions and so forth within a larger enterprise or institutional entity, such as management group, sales group, marketing group, research & development group, etc.); supply level (e.g., consumable types such as paper and toner > empty/low/ok, etc.); capability (e.g., color, economy color, monochrome only, color scan, duplex, A3, not A3, etc.); last status update (e.g., 10 minutes, 60 minutes, 6 hours, etc.); duplex usage (e.g., 2:1, 1:2, 2:2, Book Duplex, etc.); paper size usage (e.g., A3, A4, B4, etc.); pages per job (e.g., 1, 2, 6-10, etc.); pages per minute (PPM) range (e.g., 1-20 ppm, 41+ ppm, etc.); color technology (e.g., professional color, convenience color, etc.); audit results/analysis (e.g., devices which satisfied a particular audit or test, devices which did not satisfy a particular audit or test, etc.); and so forth.

The device data stored by the DM units 26-1 and 26-2 may also include error history information that includes a log of all errors occurring at the corresponding managed device, and usage history information indicating which users have the utilized the managed device and when such use has occurred. The usage history information may indicate, for example, a number of total impressions (e.g. pages) produced by a user, or a number of specific types of impressions (copy color, copy BW, print color, print BW, etc.) produced by a user.

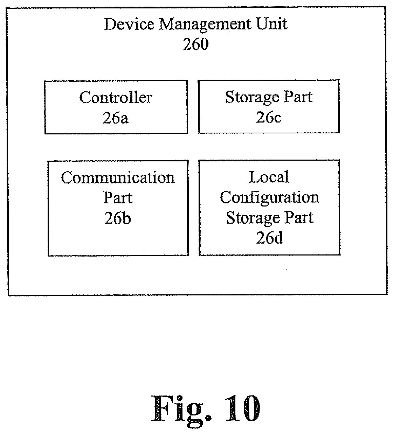

Each of the DM units 26-1 and 26-2 may include a communication part configured to communicate with one or more of the plurality of network devices 25-1 through 25-n to collect and obtain the various device data corresponding to each device. (For example, Fig. 10 shows an exemplary constitution of a device management unit 26 that includes communication part 26b). Many printers and other devices store data indicating their attributes or properties in a Management Information Base (MIB). The MIB may conform with the SNMP (Simple Network Management Protocol) protocol, and properties information can be obtained directly from the MIB through SNMP queries. In this way, the DM units are configured to discover and/or poll the corresponding plurality of network devices to obtain the device data from the network devices.

Each of the DM units 26-1 and 26-2 may obtain the device data (such as the name, status, configuration information, error history, usage history, etc.) from each network device by monitoring a network to which the device is connected, and detecting and receiving one or more alert notifications or status updates transmitted to the network(s) from any of the plurality of network devices 25-1 through 25-4. For example, each of the DM units 26-1 and 26-2 may receive the status updates by repeatedly transmitting requests (via a communication part) to the network devices 25-1 through 25-4 via the network connections 303-306, inquiring as to the status of each network device. In response, each network device may transmit status updates back to the DM units 26-1 and 26-2, wherein each status update indicates the device name, status, configuration information, error history, usage history, whether an error exists or has occurred at the network device, etc. Alternatively, each network device 25-1 through 25-n may automatically transmit status updates to the DM units 26-1 and 26-2 (without waiting for requests or queries from the DM units 26-1 and 26-2), at regular intervals or whenever an error occurs at the network device. Each DM unit 26-1 and 26-2 may include locally resident hardware and/or software agents installed locally on each of the network devices 25-1 through 25-4, which are configured to transmit the status updates directly to a communication part of each DM unit 26-1 and 26-2. The device data may be stored along with other data in a storage part of each DM unit 26-1 and 26-2. (For example, Fig. 10 shows an exemplary constitution of a device management unit 26 that includes storage part 26c). Alternatively, the device information can be stored externally to each DM unit 26-1 and 26-2 and retrieved (for example through a network) as needed.

The device management units 26-1 and 26-2 are also configured to manage the corresponding network devices according to a management policy specific to each device management unit.

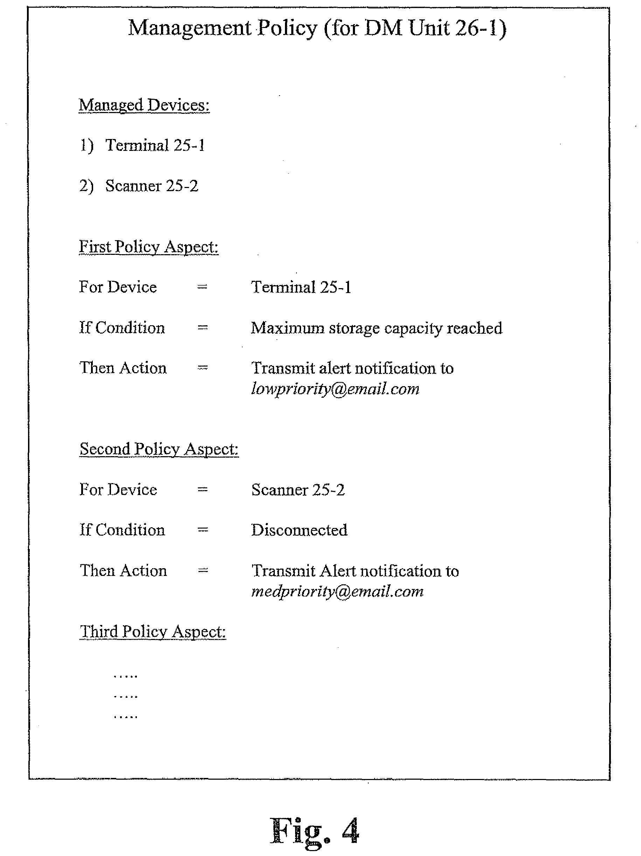

For example, Fig. 4 illustrates an example of management policy information indicating a management policy specific to the DM unit 26-1. The management policy indicates the devices that are to be managed by the DM unit 26-1, namely the devices 'Terminal 25-1' and 'Scanner 25-2'. The management policy also includes a plurality of policy aspects and/or rules. For example, in a first policy aspect of the management policy illustrated in Fig. 4, if the device 'Terminal 25-1' is associated with a condition 'Maximum storage capacity reached', then an alert notification email is to be transmitted to an administrator or user at address 'lowpriority@email.com'. That is, if the DM unit 26-1 determines, based on the device data collected from the managed network devices 25-1 and 25-2, that the device status corresponding to the terminal 25-1 is 'Maximum storage capacity reached', then the DM unit 26-1 will transmit an alert notification email to address 'lowpriority@email.com'. As another example, in a second policy aspect of the management policy illustrated in Fig. 4, if the device 'Scanner 25-2' is associated with a condition 'Disconnected', then an alert notification email is to be transmitted to an administrator or user at address 'medpriority@email.com'. That is, if the DM unit 26-1 determines, based on the device data collected from the managed network devices 25-1 and 25-2, that the device status corresponding to the scanner 25-2 is 'Disconnected', then the DM unit 26-1 will transmit an alert notification email to address 'medpriority@email.com'.

Thus, each DM unit 26-1 and 26-2 manages the network devices corresponding to that DM unit, in accordance with management policy information indicating a management policy specific to that DM unit. The information of the management policy specific to a DM unit may be stored locally at that DM unit in a storage part of the DM unit. For example, Fig. 10 illustrates an exemplary configuration of a device management unit 26, and the management policy information may be stored in the local configuration storage part 26d of the device management unit 26 illustrated in Fig. 10. Each DM unit may obtain the management policy information from the core management unit 27, as described in further detail below.

The management policy, as described herein, may include any configuration and/or setting information regarding the corresponding device management unit itself, such as: manufacturer; model; serial number; unit type (server, printer, scanner, terminal, etc.); location (physical address, geographic address, network address, IP address, MAC address, etc.); location type (e.g., production/copy center, in a specific workgroup area, etc.); scope (e.g., within the scope of administrative responsibility of a particular IT administrator, outside the scope of administrative responsibility of particular IT administrator, etc.); connection type (e.g., network connected, workstation/local connected, non-connected, etc.); functions; firmware version (e.g., major version, minor version, etc.); installed applications (e.g., application name, major version, etc.); organization (e.g., different groups, sub-groups, levels, departments, divisions and so forth within a larger enterprise or institutional entity, such as management group, sales group, marketing group, research & development group, etc.); and so forth.

The core management unit 27 illustrated in Fig. 2 manages and maintains persistent data collected in the network environment. For instance, the core management unit may obtain the persistent data from the DM units 26-1 and 26-2 via the network connections 301 and 302, and the persistent data may include the device data collected by the DM units 26-1 and 26-2 from the network devices 25-1 through 25-4.

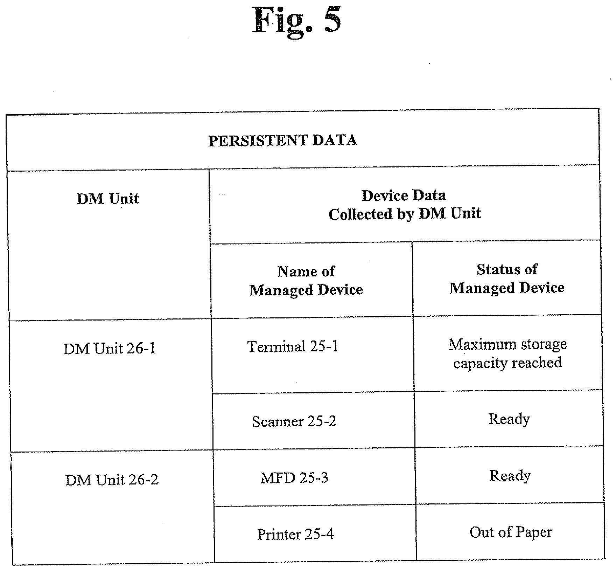

For example, Fig. 5 illustrates an example of persistent data managed and maintained by the core management unit 27, the persistent data being obtained from the DM units 26-1 and 26-2 and including the device data collected by the DM units 26-1 and 26-2 from the network devices 25-1 through 25-4. As seen in Fig. 5, the persistent data indicates, for each DM unit 26-1 and 26-2, the device data (including, for example, a name of managed device and a status of managed device) collected by that DM unit that corresponds to the network devices managed by that DM unit. That is, the persistent data of Fig. 5 indicates the device data collected by DM unit 26-1 from the network devices 25-1 and 25-2 managed by the DM unit 26-1, and indicates the device data collected by DM unit 26-2 from the network devices 25-3 and 25-4 managed by the DM unit 26-2. Thus, the device data indicated in the persistent data of Fig. 5 matches the device data collected by the DM units 26-1 and 26-2 as illustrated in Fig. 3A and 3B. The persistent data may be stored in, for example, the configuration database 27a or another storage part of the core management unit 27.

The information depicted in Fig. 5 is merely exemplary, and other device data, device status information, device properties, device configuration information, and so forth, may be included in the persistent data collected from the network environment and maintained and managed by the core management unit 27. As non-limiting examples, the persistent data may instead or in addition include one or more of the following for a given managed network device: device manufacturer; device model; device serial number; device type (printer, scanner, terminal, etc.); device location (physical address, geographic address, network address, IP address, MAC address, etc.); output technology (e.g., laser, inkjet solid ink, thermal, other technology, etc.); device location type (e.g., production/copy center, in a specific workgroup area, etc.); scope (e.g., within the scope of administrative responsibility of a particular IT administrator, outside the scope of administrative responsibility of particular IT administrator, etc.); connection type (e.g., network connected, workstation/local connected, non-connected, etc.); device age (e.g., < 1 year, 1-2 years, 2-3 years, 3-4 years, 4-5 years, > 5 years, etc.); functions (e.g., copy, fax, print, scan, copy/scan, copy/fax, copy/print, print/fax, print/scan, copy/print/fax, copy/print/scan, copy/print/fax/scan, etc.); firmware version (e.g., major version, minor version, etc.); installed applications (e.g., application name, major version, etc.); organization (e.g., different groups, sub-groups, levels, departments, divisions and so forth within a larger enterprise or institutional entity, such as management group, sales group, marketing group, research & development group, etc.); supply level (e.g., consumable types such as paper and toner > empty/low/ok, etc.); capability (e.g., color, economy color, monochrome only, color scan, duplex, A3, not A3, etc.); last status update (e.g., 10 minutes, 60 minutes, 6 hours, etc.); duplex usage (e.g., 2:1, 1:2, 2:2, Book Duplex, etc.); paper size usage (e.g., A3, A4, B4, etc.); pages per job (e.g., 1, 2, 6-10, etc.); pages per minute (PPM) range (e.g., 1-20 ppm, 41+ ppm, etc.); color technology (e.g., professional color, convenience color, etc.); audit results/analysis (e.g., devices which satisfied a particular audit or test, devices which did not satisfy a particular audit or test, etc.); and so forth.

The core management unit 27 may utilize the persistent data collected from the network and stored in the configuration database 27a to generate various device alert notifications for transmission to a predetermined destination (e.g. a website or an email address of an administrator) or for display, such as on a user interface screen of the core management unit 27. The device alert notifications may include a status change alert (e.g. the device status of a particular network device 25-1 through 25-4 has changed from a first value to a second value), a sustained status alert (e.g. the device status of a particular network device 25-1 through 25-4 has remained the same for a specified period of time), and a recurring status alert (a particular status/condition has occurred a predetermined number of times at particular network device within a specified period of time).

The core management unit 27 also manages, for each of the device management units 26-1 and 26-2, the management policy specific to that device management unit. In particular, the core management unit 27 registers the management policies of each of the DM units 26-1 and 26-2 in configuration database 27a, and communicates the management policies to the corresponding DM units 26-1 and 26-2 via the network connections 301 and 302. Configuration database may be comprised of a relational database, for example.

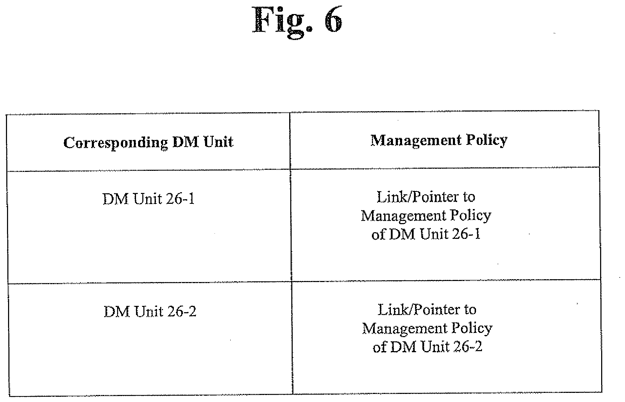

Fig. 6 illustrates an example of a table registering information stored in the configuration database 27a of the core management unit 27. The table illustrated in Fig. 6 identifies a DM unit, such as DM unit 26-1 or 26-2, and also indicates a link, universal resource locator (URL) or pointer to a location and/or address containing a current management policy corresponding to that DM unit. For instance, an example of management policy information specific to the DM unit 26-1 is illustrated in Fig. 4, and the table of Fig. 6 may include a link or pointer to this management policy information depicted in Fig. 4. The core management unit 27 is configured to transmit a link to management policy information corresponding to a particular device management unit to that device management unit. For example, the core management unit may forward the link/pointer to the management policy of DM Unit 26-1 (as illustrated in the table of Fig. 6) to DM unit 26-1. Alternatively, the core management unit may forward the management policy information itself indicating the management policy specific to DM unit 26-1 to the DM unit 26-1. While the table illustrated in Fig. 6 includes pointers/links to the appropriate management policy information, the actual information of the management policy itself may be stored in the configuration database 27a, or a storage part of the core management unit 27. Alternatively, the management policy information may be stored elsewhere, and the core management unit 27 may access the information remotely.

Thus, whereas conventional systems rely on a single management apparatus, in this exemplary embodiment there is provided a core management unit for managing one or more device management units, and each of the device management units manages a number of network devices. In particular, a core management unit manages the management policies specific to each of one or more device management units, and in turn, each of the device management units manages a corresponding group of network devices based on the management policy specific to that device management unit. Further, device data collected by each of the device management units from the network devices is provided to the core management unit. Moreover, even if the core management unit is unavailable, the device management units described in this exemplary embodiment may continue to manage the network devices, by polling the network devices and collecting and caching device data received from the network devices.

Thus, a large number of network devices may be managed by a plurality of device management units, which are themselves managed by the core management unit. Since all management policies and pertinent network data are ultimately managed and maintained at the core management server, a large number of network devices can be effectively administered by an IT administrator, and efficient transfer of data through a network is possible.

The core management unit and/or device management unit of this disclosure may be realized by a computer program product including a computer-usable, non-transient medium (such as a disk storage apparatus) having instructions tangibly embodied therein that are executed by a computer. Thus, it should be understood that the core management unit and/or device management unit may be executed on a computer. While the core management unit and/or device management unit is shown as being external to the network devices, the core management unit and/or device management unit may in fact be executed on a client terminal and/or network-connected device.

The core management unit and/or device management unit may include a data store that can comprise one or more structural or functional parts that have or support a storage function. For example, the data store can be, or can be a component of, a source of electronic data, such as a document access apparatus, a backend server connected to a document access apparatus, an e-mail server, a file server, a multi-function peripheral device (MFP or MFD), a voice data server, an application server, a computer, a network apparatus, a terminal etc. It should be appreciated that the term "electronic document" or "electronic data", as used herein, in its broadest sense, can comprise any data that a user may wish to access, retrieve, review, etc.

Each of the network connections 301 through 306 can include one or more connections via a secure intranet or extranet, a local area network (LAN), a wide area network (WAN), any type of network that allows secure access, etc., or a combination thereof.

Further, other secure communications links (such as a virtual private network, a wireless link, etc.) may be used as well in the network connections 301- through 306. In addition, the network connections 301 through 306 may use TCP/IP (Transmission Control Protocol/Internet Protocol), but other protocols such as SNMP (Simple Network Management Protocol) and HTTP (Hypertext Transfer Protocol) can also be used. How devices can connect to and communicate over the networks is well-known in the art and is discussed for example, in "How Networks Work", by Frank J. Derfler, Jr. and Les Freed (Que Corporation 2000) and "How Computers Work", by Ron White, (Que Corporation 1999).

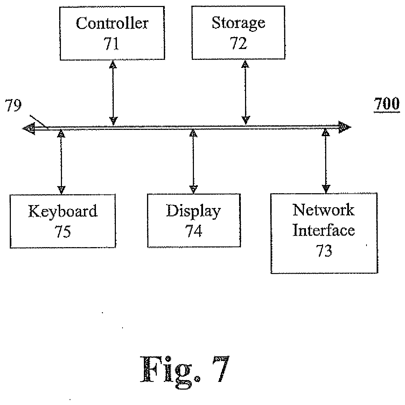

Fig. 7 shows an exemplary constitution of a computing device that can be configured (for example, through software) to operate (at least in part) as the core management unit and/or device management units illustrated in Fig. 2. As shown in Fig. 7, the management unit 700 includes a controller (or central processing unit) 71 that communicates with a number of other components, including memory or storage part 72, network interface 73, display 74 and keyboard 75, by way of a system bus 79.

The management unit 700 may be a special-purpose device (such as including one or more application specific integrated circuits or an appropriate network of conventional component circuits) or it may be software-configured on a conventional personal computer or computer workstation with sufficient memory, processing and communication capabilities to operate as a terminal and/or server, as will be appreciated to those skilled in the relevant arts.

In the management unit 700, the controller 71 executes program code instructions that controls device operations. The controller 71, memory/storage 72, network interface 73, display 74 and keyboard 75 are conventional, and therefore in order to avoid occluding the inventive aspects of this disclosure, such conventional aspects will not be discussed in detail herein.

The management unit 700 includes the network interface 73 for communications through a network, such as communications through the network connections 301-306 with the network devices 25-1 through 25-4 in Fig. 2. However, it should be appreciated that the subject matter of this disclosure is not limited to such configuration. For example, the management unit 700 may communicate with client terminals through direct connections and/or through a network to which some components are not connected. As another example, the management unit 700 does not need to be provided by a server that services terminals, but rather may communicate with the devices on a peer basis, or in another fashion.

Core management unit 27 and/or device management units 26-1 and 26-2 are not limited to a server or computer, but can be manifested in any of various devices that can be configured to communicate over a network and/or the Internet.

Each of the network-devices 25-1 through 25-4 may be any network-connected device including but not limited to a personal, notebook or workstation computer, a terminal, a kiosk, a PDA (personal digital assistant), a tablet computing device, a smartphone, a scanner, a printer, a facsimile machine, a multi-function device (MFD), a server, a mobile phone or handset, another information terminal, etc. Each network device may be configured with software allowing the network device to communicate through a network with core management unit 27 and/or device management units 26-1, 26-2.

The multi-function device (MFD) 25-3 may be any apparatus (including a microprocessor chip or a collection of devices having varying degrees of integration) that has the ability to perform two or more functionalities. The multi-function device 25-3 may be a terminal or any computing device including but not limited to a personal, notebook or workstation computer, a kiosk, a PDA (personal digital assistant), a tablet computing device, a smartphone, a scanner, a printer, a facsimile machine, a server, a mobile phone or handset, another information terminal, etc. The multi-function device 25-3 is configured with software allowing the multi-function device 25-3 to communicate through a network with core management unit 27 and/or device management units 26-1, 26-2.

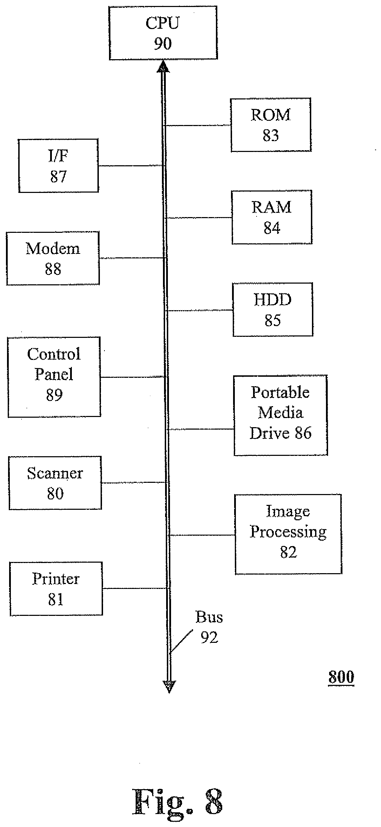

An example of a configuration of a multi-function device 25-3 is shown schematically in Fig. 8. Device 800 includes a central processing unit (CPU) 90, and various elements connected to the CPU 90 by an internal bus 92. The CPU 90 services multiple tasks while monitoring the state of the device 800. The elements connected to the CPU 90 include a scanner unit 80, a printer unit 81, an image processing device 82, a read only memory (for example, ROM, PROM, EPROM, EEPROM, etc.) 83, a random access memory (RAM) 84, a hard disk drive (HDD) 85, portable media (for example, floppy disk, optical disc, magnetic discs, magneto-optical discs, semiconductor memory cards, etc.) drives 86, a communication interface (I/F) 87, a modem unit 88, and an operation panel 89.

Program code instructions for the device 800 can be stored on the read only memory 83, on the HDD 85, or on portable media and read by the portable media drive 86, transferred to the RAM 84 and executed by the CPU 90 to carry out the instructions. These instructions can include the instructions to the device to perform specified ones of its functions and permit the device 800 to interact with core management unit 27 and/or device management units 26-1, 26-2, and to control the operation panel 89 and the image processing unit 82 of the device 800.

The operation panel 89 includes a display screen that displays information allowing the user of the device 800 to operate the device 800. The display screen can be any of various conventional displays (such as a liquid crystal display, a plasma display device, a cathode ray tube display, etc.), but is preferably equipped with a touch sensitive display (for example, liquid crystal display), and configured to provide the GUI based on information input by an operator of the device, so as to allow the operator to conveniently take advantage of the services provided by the system. The display screen does not need to be integral with, or embedded in, the operation panel 89, but may simply be coupled to the operation panel by either a wire or a wireless connection. The operation panel 89 may include keys for inputting information or requesting various operations. Alternatively, the operation panel 89 and the display screen may be operated by a keyboard, a mouse, a remote control, touching the display screen, voice recognition, or eye-movement tracking, or a combination thereof. The device 800 is a multifunction device (with scanner, printer and image processing) and in addition can be utilized as a terminal to download documents from a network.

Additional aspects or components of the device 800 are conventional (unless otherwise discussed herein), and in the interest of clarity and brevity are not discussed in detail herein. Such aspects and components are discussed, for example, in "How Computers Work", by Ron White (Que Corporation 1999), and "How Networks Work", by Frank J. Derfler, Jr. and Les Freed (Que Corporation 2000).

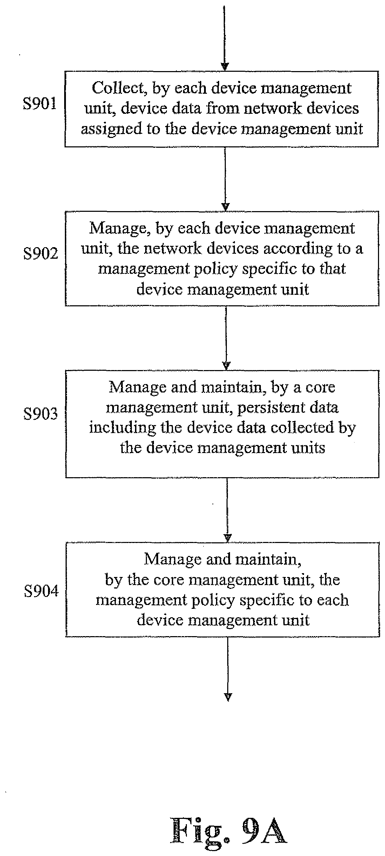

Turning now to Fig. 9A, there is shown a flowchart of a method performed by a core management unit and one or more device management units, such as a core management unit 27 and a device management units 26-1 and 26-2 illustrated in Fig. 2, according to an exemplary embodiment.

In S901, each device management unit of the one or more device management units collects device data from a plurality of network devices assigned to that device management unit. An example of device data collected by a device management unit 26-1 from a plurality of network devices 25-1 and 25-2 is illustrated in Fig. 3A, and an example of device data collected by a device management unit 26-2 from a plurality of network devices 25-3 and 25-4 is illustrated in Fig. 3B.

In S902, each of the one or more device management units manages the plurality of network devices assigned/corresponding to that device management unit, according to a management policy specific to that device management unit. An example of management policy information indicating a management policy specific to the device management unit 26-1 is illustrated in Fig. 4.

Then in S903, the core management unit manages and maintains persistent data collected in the network environment, the persistent data including the device data collected by each of one or more device management units. An example of persistent data managed and maintained by core management unit 27, including the device data
collected by DM units 26-1 and 26-2, is illustrated in Fig. 5.

Finally, in S904, the core management unit manages and maintains, for each of the one or more device management units, the management policy specific to the device management unit, including registering the management policy of the device management unit in a configuration database, and communicating the management policy to the corresponding device management unit. An example of a table registering the management policies of the device management units 26-1 and 26-2 in a configuration database is illustrated in Fig. 6.

The flowchart illustrated in Fig. 9A illustrates a method performed by both a core management unit and one or more device management units. However, either the core management unit or the device management unit may perform methods comprising one or more steps illustrated in Fig. 9A.

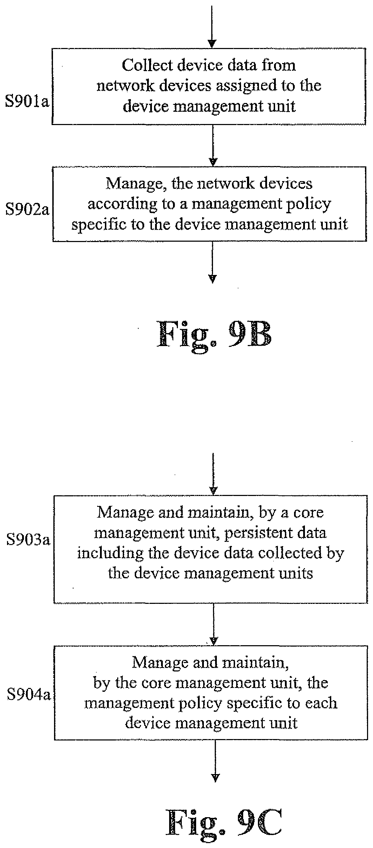

For example, Fig. 9B illustrates a flowchart of a method performed by a device management unit, such as device management unit 26-1 or 26-2 illustrated in Fig. 2, according to an exemplary embodiment. In S901a the device management unit collects device data from a plurality of network devices assigned to that device management unit. An example of device data collected by a device management unit 26-1 from a plurality of network devices 25-1 and 25-2 is illustrated in Fig. 3A, and an example of device data collected by a device management unit 26-2 from a plurality of network devices 25-3 and 25-4 is illustrated in Fig. 3B. In S902a, the device management unit manages the plurality of network devices corresponding to that device management unit, according to a management policy specific to the device management unit. An example of a management policy specific to the device management unit 26-1 is illustrated in Fig. 4.

As another example, Fig. 9C illustrates a flowchart of a method performed by a core management unit, such as core management unit 27 illustrated in Fig. 2, according to an exemplary embodiment. Steps S903a and S904a of Fig. 9C are the same as steps S903 and S904 illustrated in Fig. 9A.

Turning now to Fig. 10, there is described a device management unit 260 (which may correspond to DM unit 26-1 or 26-2) in greater detail. The device management unit 260 includes a controller 26a, communication part 26b, storage part 27c and local storage part 26d.

The controller 26a controls the communication part 26b to communicate with a plurality of network devices managed by the device management unit 260 (such as network devices 25-1 and 25-2 managed by DM unit 26-1) in order to obtain and collect device data from the network devices managed by the device management unit 260. Fig. 3A illustrates an example of device data collected by DM unit 26-1 from the network devices 25-1 and 25-2, and Fig. 3B illustrates an example of device data collected by DM unit 26-2 from the network devices 25-3 and 25-4. The controller 26a also causes the obtained device data to be stored or cached in the storage part 26c of the device management unit 260.

Further, controller 26a is also configured to determine whether the core management unit is available. For example, if the communication part 26b is able to communicate with the core management unit 27 and receive an appropriate response from the core management unit 27, then the controller 26a may determine that the core management unit 27 is available. In contrast, if the communication part 26b is not able to communicate with the core management unit 27 or receive an appropriate response from the core management unit 27, then the controller 26a may determine that the core management unit 27 is not available.

If the controller 26a determines that the core management unit 27 is available, the controller 26a causes the communication part 26b to communicate the device data (collected from the network devices managed by device management unit 260, and cached in the storage part 26c of the device management unit 260) to the core management unit 27. Moreover, the controller 26a may cause the communicated device data to be flushed from the storage part 26c of the device management unit 260. In this manner, the required capacity of the storage part 26c of the device management unit may be minimized.

On the other hand, if the controller 26a determines that the core management unit 27 is unavailable, the communication part 26b continues to communicate with the plurality of network devices managed by the device management unit 260 in order to obtain and collect device data from the network devices, and the obtained device data continues to be stored or cached in the storage part 26c of the device management unit 260. That is, the device data from a plurality of network devices is collected by the device management units (such as DM units 26-1 and 26-2), even if the device management units cannot communicate with the core management unit 27.

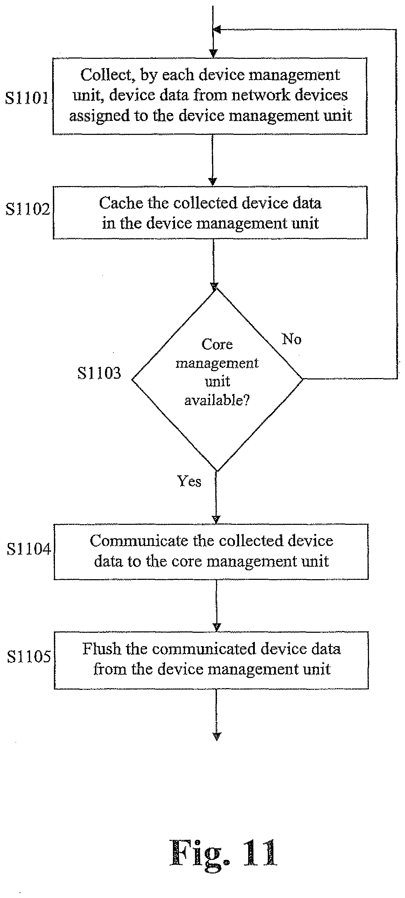

In Fig. 11, there is shown a flowchart of a method performed by each of one or more device management units, such as device management unit 260 illustrated in Fig. 10, according to an exemplary embodiment.

In S1101, each device management unit collects device data from a plurality of network devices managed by the device management unit (such as network devices 25-1 and 25-2 managed by DM unit 26-1). In S1102, each device management unit caches the collected device data in a storage part of the device management unit. In S1103, the device management unit determines whether a core management unit (such as core management unit 27) is available. If the device management unit determines that the core management unit is available (S1103, Yes), then the device management unit communicates the collected device data to the core management unit (S1104), and flushes the communicated device data from the storage part of the device management unit (S1105). If the device management unit determines that the core management unit is not available (S1103, No), then the workflow returns to S1101.

According to this exemplary embodiment, the device management unit 260 may optionally cache in the storage part, for each of the plurality of network devices managed by the device management unit (such as network devices 25-1 and 25-2 managed by DM unit 26-1), only a most recent instance of the device data collected by the device management unit from that network device. That is, in S1102 of the method illustrated in Fig. 11, the device management unit may optionally cache only the most recent instance of the device data collected by the device management unit from a network device, and the device management unit does not retain less recent device data collected by the device management unit from a network device. In this manner, the required capacity of the storage part 26c of the device management unit may be minimized.

According to another aspect of this disclosure, the device management unit 260 illustrated in Fig. 10 also includes a local configuration storage part 26d that registers the management policy of the device management unit 260 (or information indicating the management policy of the device management unit 260). An example of management policy information indicating a management policy specific to the device management unit 26-1 is illustrated in Fig. 4, and such information may be stored in the local configuration storage part 26d.

Moreover, if the controller 26a determines that the core management unit 27 is available, the controller 26a causes the communication part 26b to communicate with the core management unit 27 and obtain the most current version of the management policy for the device management unit 260 from the configuration database 27a of the core management unit 27. In this way, the device management unit 27 'resynchronizes' the management policy registered locally (in the local configuration storage part 26d) with the management policy maintained by the core management unit, when the core management unit is available for communication.

On the other hand, if the controller 26a determines that the core management unit 27 is unavailable, the communication part 26b continues to attempt to communicate with the core management unit 27. In the meantime, the device management unit 260 still manages the plurality of network devices assigned to the device management unit 260, based on the management policy registered locally (in the local configuration storage part 26d), even though the core management unit may not be available for communication.

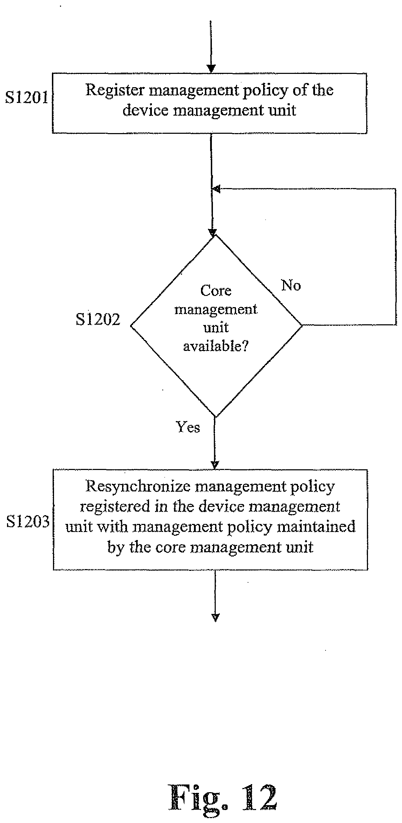

In Fig. 12, there is shown a flowchart of a method performed by each of one or more device management units, such as device management unit 260 illustrated in Fig. 10, according to an exemplary embodiment.

In S1201, each device management unit registers the management policy specific to that device management unit (or information indicating the management policy specific to that device management unit) in, for example, a local configuration storage part of the device management unit. In S1202, the device management unit determines whether a core management unit (such as core management unit 27) is available for communication. If the device management unit determines that the core management unit is available (S1202, Yes), then the device management unit resynchronizes the management policy registered locally with the management policy maintained by the core management unit for the device management unit (S1203). If the device management unit determines that the core management unit is not available (S1202, No), then the workflow returns to S1202.

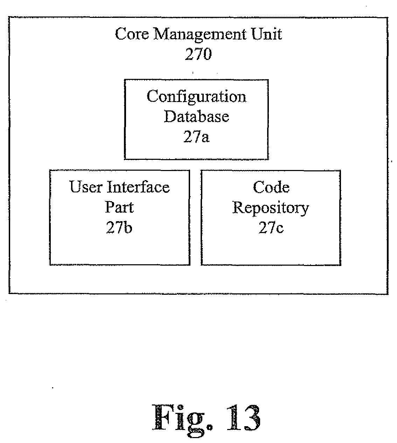

Turning now to Fig. 13, there is described a core management unit 270 (which may correspond to core management unit 27) in greater detail. The core management unit 270 includes a configuration database 27a, user interface part 27b and code repository 27c.

As described above, the configuration database 27a stores current versions of one or more management policies corresponding to one or more device management units (such as device management units 26-1 and 26-2 illustrated in Fig. 2). Fig. 6 illustrates an example of a table registering information stored in the configuration database 27a of the core management unit 270. The table illustrated in Fig. 6 identifies a DM unit, such as DM unit 26-1 or 26-2, and also registers a link, universal resource locator or pointer to location/address containing a current management policy corresponding to that DM unit.

The user interface part 27b of the core management unit 270 is configured to display one or more user interface screens allowing an administrator or user of the core management unit 270 to set the current configuration and/or management policy of each of the device management units (such as DM units 26-1 and 26-2 illustrated in Fig. 2).

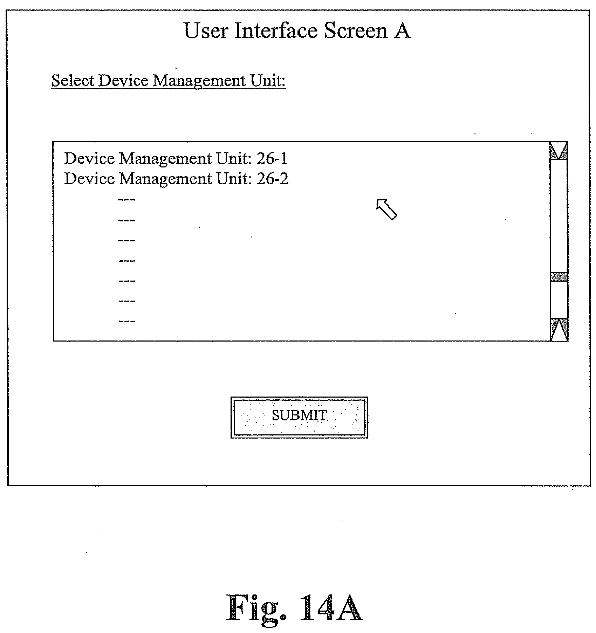

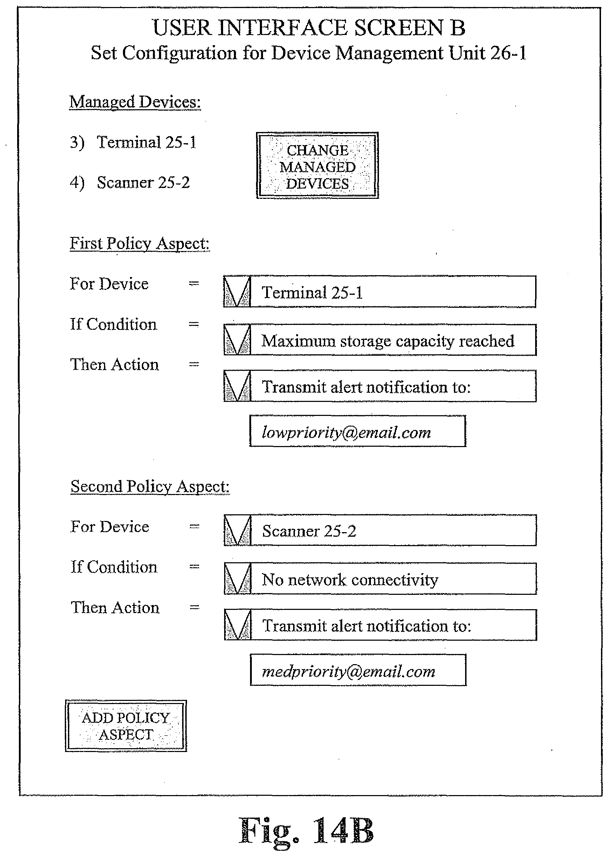

For example, the user interface part 27b may display the user interface screen A illustrated in Fig. 14A, which is configured to receive user selection of a device management unit, such as device management unit 26-1 or 26-2. Once the user selects a particular device management unit, such as device management unit 26-1, the user interface part 27b may display the user interface screen B illustrated in Fig. 14B, which allows a user to set the configuration and/or management policy of the selected device management unit, such as DM Unit 26-1.

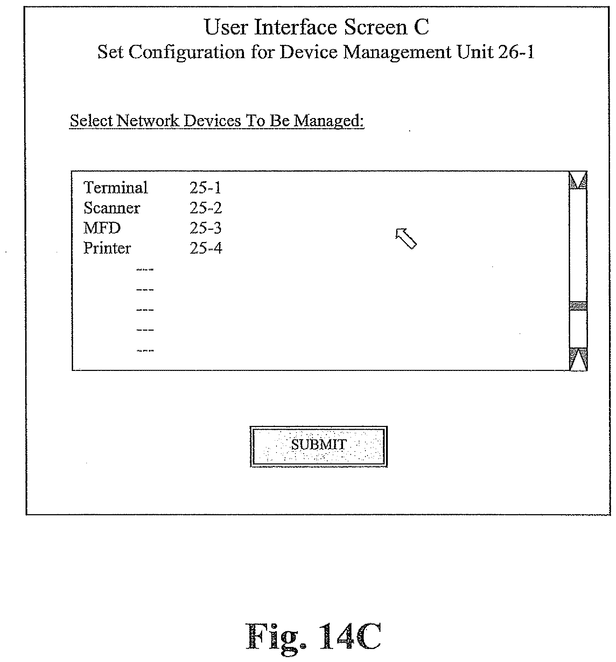

For example, the user interface screen B illustrated in Fig. 14B allows the user to specify/edit the information corresponding to each policy aspect of the management policy of DM Unit 26-1, as well as generate new information for an additional policy aspect by clicking on the 'Add Policy Aspect' button. Moreover, the user is permitted to assign the selected device management unit to manage specific network devices, by clicking on the 'Change Managed Devices' button. When the user clicks on this button, the user interface part 27b may display the user interface screen C illustrated in Fig. 14C, which is configured to receive user selection of one or more network devices, such as network devices 25-1 through 25-4, to be managed by the corresponding device management unit. Thus, the user interface of the core management unit 270 allows assigning a specific one of the device management units to manage specific network devices.

The user interface part 27b may include hardware and/or software configured to display a graphical user interfaces (GUI) and/or an object-oriented user interface on a display part (such as a monitor, display screen, etc.) of the core management unit 270 or network-connected client terminal, and which accepts inputs via an input part (such as a keyboard, mouse, touchscreen, etc.) of the core management unit 270 or network-connected client terminal. The user interface part 27b may in addition or instead include a Web-based user interface or web user interface (WUI) that generates web pages which are transmitted via a network (e.g. the Internet) and viewed by the user using a web browser program on the core management unit 270 or a client terminal connected to a network (e.g. the Internet) . The user interface part 27b may be implemented utilizing software programs and/or languages such as Java, AJAX, Adobe Flex, Microsoft .NET, or similar technologies.

According to another aspect of this disclosure, the core management unit 270 also includes a code repository 27c (see Fig. 13) that registers code executable by, and available for upload to, one or more network devices, such as devices 25-1 through 25-4. The codes referred to herein may be, for example, a series of program code instructions executable by a processor of the corresponding network device, that when executed by the processor causes the processor to control the device operations of the corresponding network device.

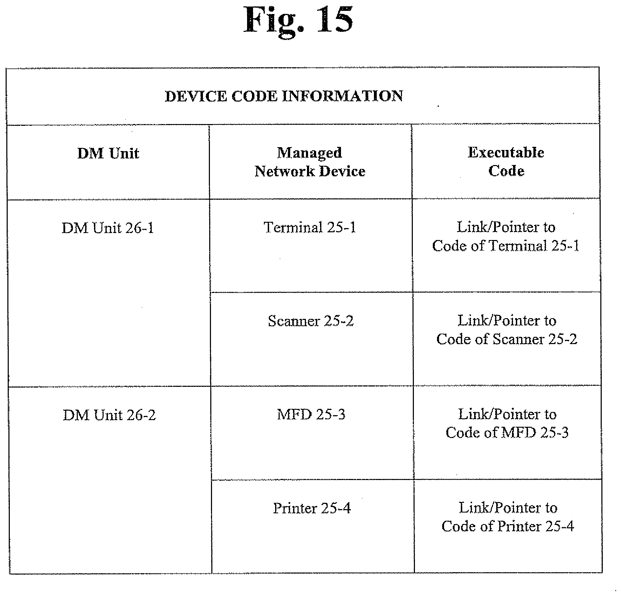

For example, Fig. 15 illustrates an example of a table registering device code information stored in the code repository 27c of the core management unit 270. The device code information registered in the table illustrated in Fig. 15 identifies a device management unit, such as DM units 26-1 and 26-2, and identifies the corresponding network device devices 25-1 through 25-4 managed by each device management unit. The device code information also registers a link, universal resource locator or pointer to location/address containing executable code for each network device. While the table illustrated in Fig. 15 includes pointers/links to the appropriate executable code, the actual executable code itself may be stored in the code repository 27c, or another storage part of the core management unit 270. Alternatively, the executable code may be stored elsewhere, and the core management unit 270 may access the information remotely.

According to this exemplary embodiment, the core management unit 270 may transmit the device code information and/or executable codes (and/or links to the executable codes) corresponding to network devices managed by a particular device management unit (such as DM units 26-1 or 26-2), to that particular device management unit. After the particular device management unit receives the executable codes (or links to the executable codes) from the core management unit 270, the device management unit may upload the executable codes (or links to the executable codes) to the corresponding network devices. For example, after the DM unit 26-2 receives the executable code (or link to the executable code) for the MFD 25-3, the DM unit 26-2 may upload the executable code (or link to the executable code) to the MFD 25-3 so that, for example, a controller of the MFD 25-3 may obtain and execute the executable code.

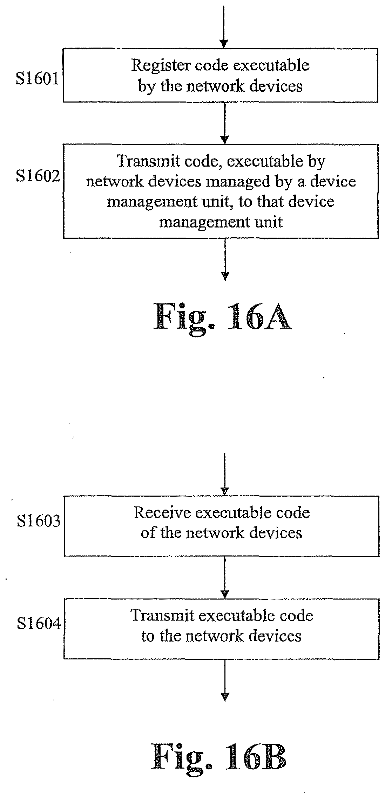

Fig. 16A illustrates a flowchart of a method performed by a core management unit, such as core management unit 270 illustrated in Fig. 13, according to an exemplary embodiment. In S1601, the core management unit registers code executable by, and available for upload to, one or more network devices, such as devices 25-1 through 25-4. In S1602, the core management unit transmits, to each device management unit, device code information indicating, for each network device amongst the network devices managed by the device management unit, executable code registered by the core management unit. Alternatively, the core management unit may transmit, to each device management unit, the executable codes (or links to the executable codes) of network devices managed by that device management unit.

Fig. 16B illustrates a flowchart of a method performed by a device management unit, such as DM units 26-1 and 26-2 illustrated in Fig. 2, according to an exemplary embodiment. In S1603, each device management unit receives device code information indicating, for each network device amongst the network devices managed by the device management unit, executable code registered by the core management unit. Alternatively, each device management unit receives the executable codes (or links to the executable codes) of network devices managed by that device management unit. In S1604, the device management unit obtains (e.g. via links) and uploads each piece of executable code to the corresponding network device.

While the example shown in Fig. 2 includes one core management unit, two device management units and four network devices, it should be appreciated that such numbers of units, devices, terminals and apparatuses are arbitrary and are selected as an example in order to facilitate discussion, and that the subject matter of this disclosure can be implemented in a system including one or more systems, servers, units, apparatuses and terminals. Some or all of the aforementioned devices may be combined, and other devices, such as scanners, printers and multi-function devices may also be connected to a network, as is well known in the art.

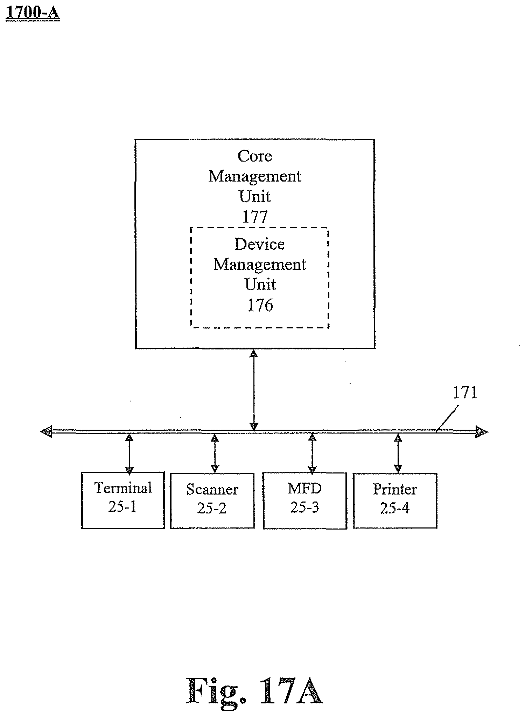

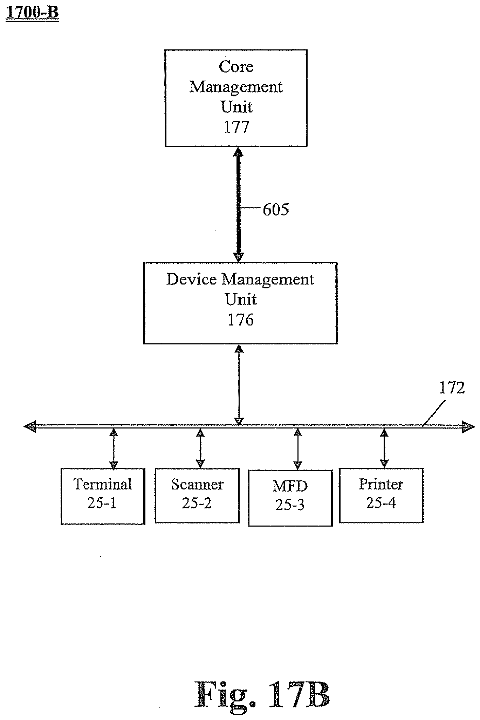

For example, Fig. 17A illustrates a system 1700-A wherein the device management unit 176 is included within the core management unit 177 (e.g. as a single server). The combined DM unit 176 and core management unit 177 is interconnected with the network devices 25-1 through 25-4 via network 171. As another example, Fig. 17B illustrates a system 1700-B wherein only a single device management unit 176 is provided. The DM unit 176 and core management unit 177 communicate via network connection 605, and the DM unit 176 communicates with the network devices 25-1 through 25-4 via network 172.

Further, the core management unit, device management units and network devices may be connected in different network arrangements to that depicted in Fig. 2.

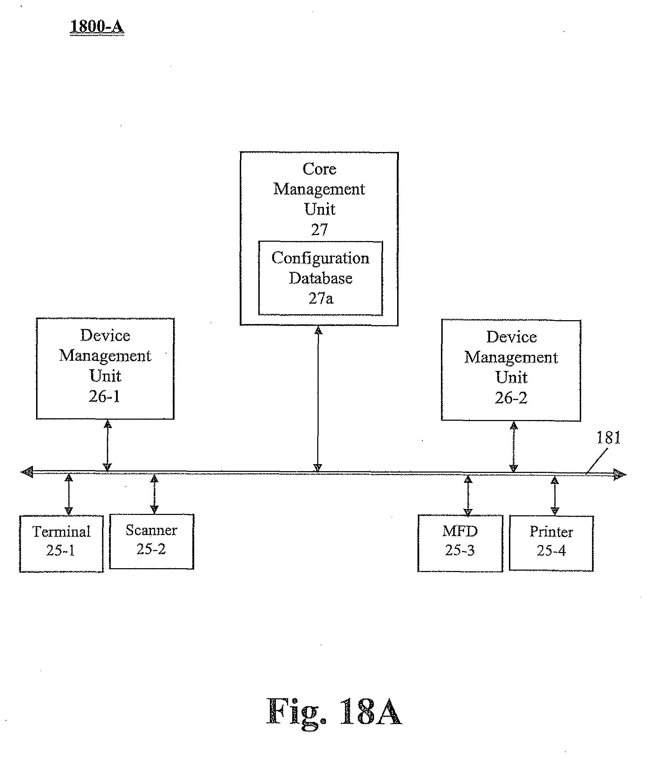

For example, Fig. 18A shows schematically a system 1800-A for managing a plurality of devices connected to one or more networks, according to an exemplary embodiment. System 1800-A includes a plurality of network devices (i.e. network-connected devices) 25-1 through 25-4, one or more device management (DM) units 26-1 and 26-2, and a core management unit 27 all interconnected by the network 181. The aforementioned devices may function in a substantially similar manner as the devices illustrated in Fig. 2, and in accordance with one or more of the described aspects and embodiments of this disclosure.

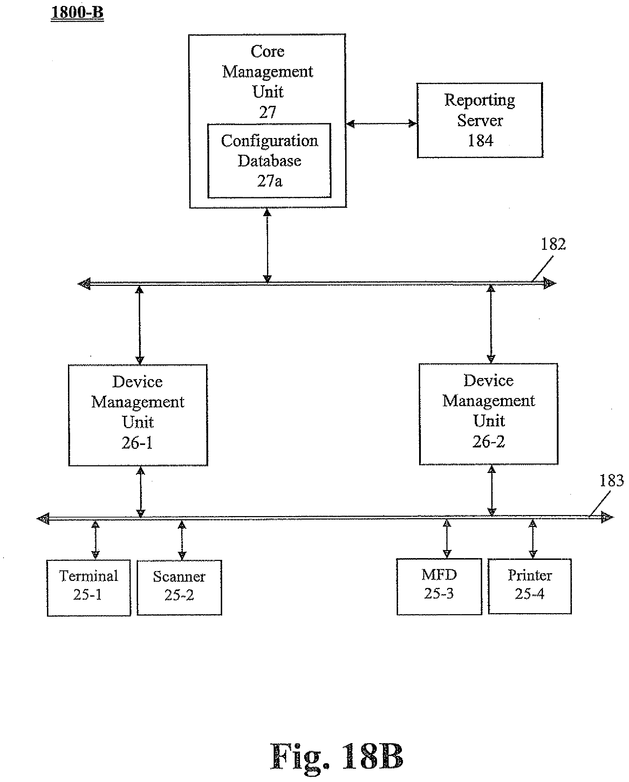

As another example, Fig. 18B shows schematically a system 1800-B for managing a plurality of devices connected to one or more networks, according to another exemplary embodiment. System 1800-B includes a plurality of network devices (i.e. network-connected devices) 25-1 through 25-4, one or more device management (DM) units 26-1 and 26-2, and a core management unit 27. The aforementioned devices may function in a substantially similar manner as the devices illustrated in Fig. 2, and in accordance with one or more of the described aspects and embodiments of this disclosure. Moreover, while the DM units 26-1 and 26-2 and network devices 25-1 through 25-4 are interconnected via a network 183, the core management unit 27 and DM units 26-1 and 26-2 are interconnected via a separate network 182 (Fig. 18B). The core management unit 27 may communicate with the device management units 26-1 and 26-2 via, for example, the internet.

System 1800-B also includes a reporting server 184 separate from the core management unit 27. The reporting server 184 may be accessible by a client or customer via the internet, for example, and may store various information (such as the persistent data obtained by the device management units 26-1 and 26-2 from the network devices) in a specific reporting format for reporting to the client or customer. By providing the dedicated reporting server 184 that is separate from the core management unit 27, the client or customer may more easily access the persistent data from an external location, without having to negotiate directly with the core management unit 27 and/or other the internal servers. Moreover, the configuration of the dedicated reporting server 184 (e.g. reporting rules, reporting format, etc.) may be specifically customized to allow for the reporting of information to the client or customer.

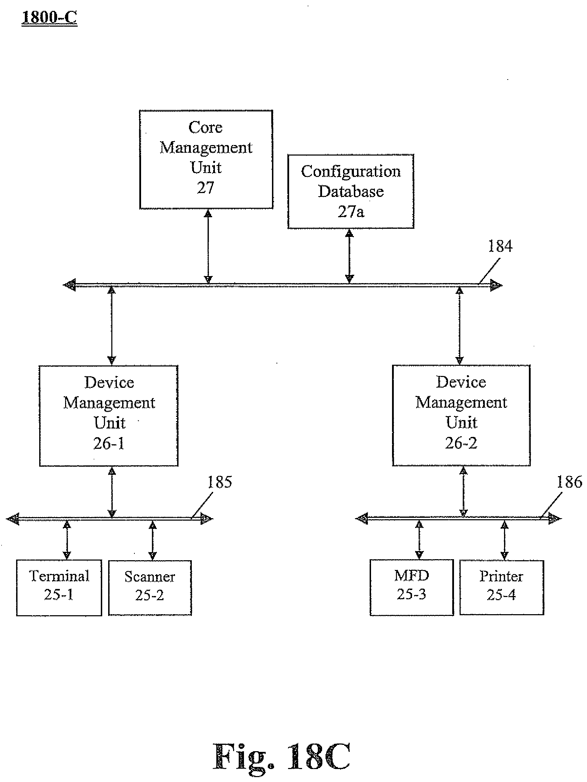

Fig. 18C shows schematically a system 1800-C for managing a plurality of devices connected to one or more networks, according to another exemplary embodiment. System 1800-C includes a plurality of network devices (i.e. network-connected devices) 25-1 through 25-4, one or more device management (DM) units 26-1 and 26-2, and a core management unit 27. The aforementioned devices may function in a substantially similar manner as the devices illustrated in Fig. 2, and in accordance with one or more of the described aspects and embodiments of this disclosure. Moreover, while the DM unit 26-1 and network devices 25-1 and 25-2 managed by the DM unit 26-1 are interconnected via a network 185, the DM unit 26-2 and network devices 25-3 and 25-4 managed by the DM unit 26-2 are interconnected via a separate network 186, and the core management unit 27 and DM units 26-1 and 26-2 are interconnected via yet another network 184 (Fig. 18C). The core management unit 27 may communicate with the device management units 26-1 and 26-2 via, for example, the internet.

In the exemplary embodiment illustrated in Fig. 2, the core management unit 27 is depicted as directly including or physically incorporating the configuration database 27a. However, these and other part(s) of the core management unit (including the parts of core management unit 270 illustrated in Fig. 13) may be located externally from the core management unit, wherein the core management unit accesses remotely the functionalities of these external parts. Fig. 18C illustrates a system wherein the configuration database 27a is external to the core management unit 27.

In the systems illustrated in Figs. 2, 17A-17B and 18A through 18C, the DM units may poll the network devices 25-1 through 25-4 and communicate with the network devices 25-1 through 25-4 using a first network communication protocol, such as SNMP, in order to obtain the device data from the network devices. Thereafter, the DM units may convert the device data into data having another format (such as HTTP) for transmission to the core management unit, reporting server 184, another network-connected device, a "cloud" server system, and so forth. The core management unit may communicate with the device management units through a particular network communication protocol, such as HTTP via the internet.

Although the network devices 25-1 through 25-4 depicted in Fig. 2 are shown as being connected to one or more networks, the aspects of this disclosure may be applied to a system for managing a device that is not connected to a network but utilizes instead point-to-point communication, such as radio-frequency identification (RFID) technology.

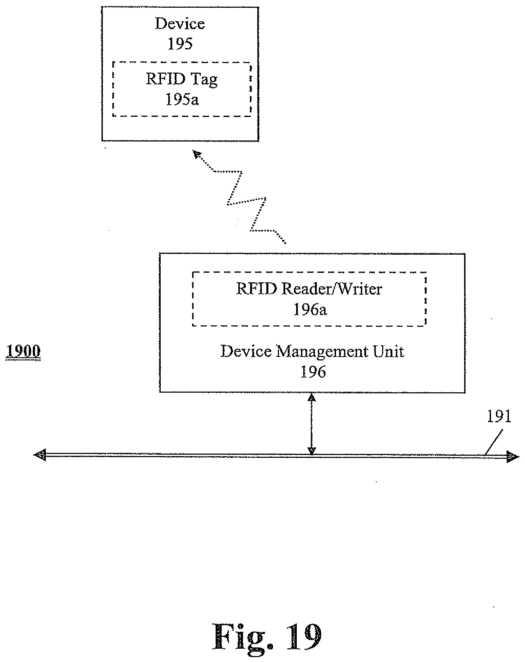

Fig. 19 depicts an example of a system for managing devices, according to another exemplary embodiment. The system 1900 includes a device management unit 196, which may be similar to the device management units 26-1 and 26-2 depicted in Fig. 2, except that the device management unit 196 also includes an RFID reader/writer 196a. The system 1900 further includes a device 195 which is an IT asset (such as, electronically-controlled stapler, shredder, etc.) and has an RFID tag 195a attached to, or incorporated into, the device 195. The RFID reader/writer 196a of the device management unit 196 can communicate with the RFID tag 195a of the device 195 in order to obtain device data from the device 195 or communicate with the device 195. Aspects of RFID technology, including the ability for RFID reader/writer devices to communicate with RFID tags, are understood in the art and will not be described in detail in this disclosure.

## Claims

1. A system (200) for managing device data of devices in a network environment, said system comprising:
one or more device management units (26-1, 26-2), each device management unit (26-1, 26-2) amongst the one or more device management units (26-1, 26-2) being adapted to collect the device data from a corresponding plurality of network devices (25-1, 25-2, 25-3, 25-4) and to manage the device data of the network devices (25-1, 25-2, 25-3, 25-4) according to a management policy specific to the device management unit (26-1, 26-2), wherein said management policy indicates one or more actions to be taken by each of the one or more device management units (26-1, 26-2) based on device status information included in the device data collected by a device management unit (26-1, 26-2) from the corresponding plurality of network devices (25-1, 25-2, 25-3, 25-4), the device status information of a specific network device (25-1, 25-2, 25-3, 25-4) indicating a current device status of the specific network device (25-1, 25-2, 25-3, 25-4);
a core management unit (27) configured to manage and maintain persistent data collected in the network environment, the persistent data including the device data collected by the one or more device management units (26-1, 26-2), wherein
the core management unit (27) is configured to manage for said each device management unit (26-1, 26-2) amongst the one or more device management units (26-1, 26-2), the management policy specific to the device management unit (26-1, 26-2), and to communicate the management policy to the device management unit (26-1, 26-2), and the core management unit (27) is configured to register the management policy of each device management unit (26-1, 26-2) in a configuration database (27a) by storing a link or pointer to management policy information stored in the configuration database (27a) or a storage part of the core management unit (27).

2. The system (200) of claim 1, wherein
each device management unit amongst the one or more device management units (26-1, 26-2) includes a storage part, and wherein
the device management unit (26-1, 26-2) communicates the collected device data to the core management unit (22) when the core management unit (27) is available, and when the core management unit (27) is not available, the device management unit (26-1, 26-2) continues to operate to collect device data and cache the collected device data in the storage part of the device management unit (26-1, 26-2).

3. The system (200) of claim 1, wherein
each device management unit (26-1, 26-2) amongst the one or more device management units (26-1, 26-2) includes a local configuration storage part registering the management policy of the device management unit (26-1, 26-2), and when the core management unit (27) is available after being unavailable, the device management unit (26-1, 26-2) resynchronizes the management policy registered in the local configuration storage part of the device management unit (26-1, 26-2) with the management policy maintained by the core management unit (27) for the device management unit (26-1, 26-2).

4. The system (200) of claim 1, wherein each device management unit amongst the one or more device management units (26-1, 26-2) includes a storage part, and the device management unit (26-1, 26-2) caches in the storage part, for each of the plurality of network devices (25-1, 25-2, 25-3, 25-4) managed by the device management unit (26-1, 26-2), only a most recent instance of the device data collected by the device management unit (26-1, 26-2) from the network device (25-1, 25-2,25-3, 25-4).

5. The system (200) of claim 1, wherein the core management unit (27) includes an administrative user interface that allows setting, for any device management unit (26-1, 26-2) amongst the one or more device management units (26-1, 26-2), a configuration of the device management unit (26-1, 26-2).

6. The system (200) of claim 1, wherein the core management unit (27) includes a code repository that registers code executable by, and available for upload to, the network devices (25-1, 25-2, 25-3, 25-4).

7. The system (200) of claim 6, wherein
each device management unit (26-1, 26-2) amongst the one or more device management units (26-1, 26-2) receives from the core management unit (27), device code information indicating for each network device (25-1, 25-2, 25-3, 25-4) amongst the network devices (25-1, 25-2, 25-3, 25-4) managed by the device management unit code registered in the code repository for the network device (25-1, 25-2, 25-3, 25-4).

8. The system (200) of claim 1, wherein the device management unit (26-1, 26-2) polls the corresponding plurality of network devices (25-1, 25-2, 25-3, 25-4) to obtain the device data from the network devices (25-1, 25-2, 25-3, 25-4).

9. The system (200) of claim 1, wherein the device management unit (26-1, 26-2) discovers the corresponding plurality of network devices (25-1, 25-2, 25-3, 25-4), and obtains the device data from the network devices (25-1, 25-2, 25-3, 25-4).

10. A method for managing devices in a network environment, said method comprising:
collecting, by each device management unit (26-1, 26-2) of a plurality of device management units (26-1, 26-2), device data from a plurality of network devices (25-1, 25-2, 25-3, 25-4) assigned to the device management unit;
managing, by the device management unit (26-1, 26-2), the device data of the plurality of network devices (25-1, 25-2, 25-3, 25-4) according to a management policy specific to the device management unit (26-1, 26-2), wherein said management policy indicates one or more actions to be taken by each of the one or more device management units (26-1, 26-2) based on device status information included in the device data collected by a device management unit (26-1, 26-2) from the corresponding plurality of network devices, the device status information of a specific network device (25-1, 25-2, 25-3, 25-4) indicating a current device status of the specific network device (25-1, 25-2, 25-3, 25-4);
managing and maintaining, by a core management unit (27), persistent data collected in the network environment, the persistent data including the device data collected by the device management units (26-1, 26-2);
managing and maintaining, by the core management unit (27), for said each device management unit (26-1, 26-2) amongst the device management units (26-1, 26-2), the management policy specific to the device management unit (26-1, 26-2), including registering the management policy of the device management unit (26-1, 26-2) in a configuration database, and communicating, by the core management unit (27), the management policy to the device management unit (26-1, 26-2), and registering, by the core management unit (27), the management policy of each device management unit (26-1, 26-2) in a configuration database (27a) by storing a link or pointer to management policy information stored in the configuration database (27a) or a storage part of the core management unit (27).

11. The method of claim 10, further comprising:
communicating, by each device management unit (26-1, 26-2), the collected device data to the core management unit (27), when the core management unit (27) is available, and
collecting device data and caching the collected device data in the storage part of the device management unit (26-1, 26-2), when the core management unit (27) is not available.

12. The method of claim 10, further comprising:
registering, by each device management unit (26-1, 26-2), the management policy of the device management unit (26-1, 26-2), and
resynchronizing the management policy registered in the device management unit (26-1, 26-2) with the management policy maintained by the core management unit (27) for the device management unit (26-1, 26-2), when the core management unit (27) is available.

13. The method of claim 10, further comprising:
caching, by each device management unit (26-1, 26-2), only a most recent instance of the device data collected by the device management unit (26-1, 26-2) from each of the plurality of network devices (25-1, 25-2, 25-3, 25-4) managed by the device management unit (26-1, 26-2).

14. The method of claim 10, further comprising:
registering in a code repository, by the core management unit (27), code executable by, and available for upload to, the network devices (25-1, 25-2, 25-3, 25-4).

15. The method of claim 14, further comprising:
transmitting, from the core management unit (27) to a first device management unit (26-1, 26-2), device code information indicating for each network device (25-1, 25-2, 25-3, 25-4) amongst the network devices (25-1, 25-2, 25-3, 25-4) managed by the first device management unit (26-1, 26-2) code registered in the code repository for the network device (25-1, 25-2, 25-3, 25-4).

## Patentansprüche

1. System (200) zum Verwalten von Gerätedaten von Geräten in einer Netzwerkumgebung, wobei das System Folgendes umfasst:
eine oder mehrere Geräteverwaltungseinheiten (26-1, 26-2), wobei jede Geräteverwaltungseinheit (26-1, 26-2) aus der einen oder den mehreren Geräteverwaltungseinheiten (26-1, 26-2) angepasst ist, um die Gerätedaten von einer entsprechenden Vielzahl von Netzwerkgeräten (25-1,25-2,25-3,25-4) zu sammeln und um die Gerätedaten der Netzwerkgeräte (25-1, 25-2, 25-3, 25-4) gemäß einer für die Geräteverwaltungseinheit (26-1, 26-2) spezifischen Verwaltungsrichtlinie zu verwalten, wobei die Verwaltungsrichtlinie eine oder mehrere von jeder der einen oder mehreren Geräteverwaltungseinheiten (26-1, 26-2) zu ergreifende Maßnahmen basierend auf Gerätestatusinformationen angibt, die in den Gerätedaten beinhaltet sind, die durch eine Geräteverwaltungseinheit (26-1, 26-2) von der entsprechenden Vielzahl von Netzwerkgeräten (25-1, 25-2, 25-3, 25-4) gesammelt werden, wobei die Gerätestatusinformationen eines spezifischen Netzwerkgeräts (25-1, 25-2, 25-3, 25-4) einen aktuellen Gerätestatus des spezifischen Netzwerkgeräts (25-1, 25-2, 25-3, 25-4) angeben;
eine Kernverwaltungseinheit (27), die konfiguriert ist, um persistente Daten, die in der Netzwerkumgebung gesammelt werden, zu verwalten und zu erhalten, wobei die persistenten Daten die Gerätedaten beinhalten, die durch die eine oder die mehreren Geräteverwaltungseinheiten (26-1, 26-2) gesammelt werden, wobei
die Kernverwaltungseinheit (27) konfiguriert ist, um für jede Geräteverwaltungseinheit (26-1, 26-2) aus der einen oder den mehreren Geräteverwaltungseinheiten (26-1, 26-2) die für die Geräteverwaltungseinheit (26-1, 26-2) spezifische Verwaltungsrichtlinie zu verwalten und um die Verwaltungsrichtlinie an die Geräteverwaltungseinheit (26-1, 26-2) zu übermitteln, und
die Kernverwaltungseinheit (27) konfiguriert ist, um die Verwaltungsrichtlinie jeder Geräteverwaltungseinheit (26-1, 26-2) in einer Konfigurationsdatenbank (27a) durch Speichern eines Links oder einer Hinweisadresse zu Verwaltungsrichtlinieninformationen, die in der Konfigurationsdatenbank (27a) gespeichert sind, oder in einem Speicherteil der Kernverwaltungseinheit (27) zu registrieren.

2. System (200) nach Anspruch 1, wobei
jede Geräteverwaltungseinheit aus der einen oder den mehreren Geräteverwaltungseinheiten (26-1, 26-2) einen Speicherteil beinhaltet und wobei
die Geräteverwaltungseinheit (26-1, 26-2) die gesammelten Gerätedaten an die Kernverwaltungseinheit (22) übermittelt, wenn die Kernverwaltungseinheit (27) verfügbar ist, und wenn die Kernverwaltungseinheit (27) nicht verfügbar ist, die Geräteverwaltungseinheit (26-1, 26-2) weiter betrieben wird, um Gerätedaten zu sammeln und die gesammelten Gerätedaten in dem Speicherteil der Geräteverwaltungseinheit (26-1, 26-2) zwischenzuspeichern.

3. System (200) nach Anspruch 1, wobei
jede Geräteverwaltungseinheit (26-1, 26-2) aus der einen oder den mehreren Geräteverwaltungseinheiten (26-1, 26-2) einen lokalen Konfigurationsspeicherteil beinhaltet, der die Verwaltungsrichtlinie der Geräteverwaltungseinheit (26-1, 26-2) registriert, und wenn die Kernverwaltungseinheit (27) verfügbar ist, nachdem sie nicht verfügbar war, die Geräteverwaltungseinheit (26-1, 26-2) die Verwaltungsrichtlinie, die in dem lokalen Konfigurationsspeicherteil der Geräteverwaltungseinheit (26-1, 26-2) registriert ist, mit der Verwaltungsrichtlinie neu synchronisiert, die durch die Kernverwaltungseinheit (27) für die Geräteverwaltungseinheit (26-1, 26-2) erhalten wird.

4. System (200) nach Anspruch 1, wobei jede Geräteverwaltungseinheit aus der einen oder den mehreren Geräteverwaltungseinheiten (26-1, 26-2) einen Speicherteil beinhaltet und die Geräteverwaltungseinheit (26-1, 26-2) in dem Speicherteil für jede der Vielzahl von Netzwerkgeräten (25-1, 25-2, 25-3, 25-4), die durch die Geräteverwaltungseinheit (26-1, 26-2) verwaltet werden, nur eine neueste Instanz der Gerätedaten zwischenspeichert, die durch die Geräteverwaltungseinheit (26-1, 26-2) von dem Netzwerkgerät (25-1, 25-2, 25-3, 25-4) gesammelt werden.

5. System (200) nach Anspruch 1, wobei die Kernverwaltungseinheit (27) eine administrative Benutzeroberfläche beinhaltet, die ein Einstellen für jede Geräteverwaltungseinheit (26-1, 26-2) aus der einen oder den mehreren Geräteverwaltungseinheiten (26-1,26-2) einer Konfiguration der Geräteverwaltungseinheit (26-1, 26-2) ermöglicht.

6. System (200) nach Anspruch 1, wobei die Kernverwaltungseinheit (27) einen Codespeicher beinhaltet, der Code registriert, der von den Netzwerkgeräten (25-1, 25-2, 25-3, 25-4) ausführbar ist und zum Hochladen auf diese verfügbar ist.

7. System (200) nach Anspruch 6, wobei
jede Geräteverwaltungseinheit (26-1, 26-2) aus der einen oder den mehreren Geräteverwaltungseinheiten (26-1, 26-2) von der Kernverwaltungseinheit (27) Gerätecodeinformationen empfängt, die für jedes Netzwerkgerät (25-1, 25-2, 25-3, 25-4) aus den Netzwerkgeräten (25-1, 25-2, 25-3, 25-4), die durch die Geräteverwaltungseinheit verwaltet werden, Code angeben, der in dem Codespeicher für das Netzwerkgerät (25-1, 25-2, 25-3, 25-4) registriert ist.

8. System (200) nach Anspruch 1, wobei die Geräteverwaltungseinheit (26-1, 26-2) die entsprechende Vielzahl von Netzwerkgeräten (25-1, 25-2, 25-3, 25-4) abfragt, um die Gerätedaten von den Netzwerkgeräten (25-1, 25-2, 25-3, 25-4) zu erhalten.

9. System (200) nach Anspruch 1, wobei die Geräteverwaltungseinheit (26-1, 26-2) die entsprechende Vielzahl von Netzwerkgeräten (25-1, 25-2, 25-3, 25-4) erkennt und die Gerätedaten von den Netzwerkgeräten (25-1, 25-2, 15-3, 25-4) erhält.

10. Verfahren zum Verwalten von Geräten in einer Netzwerkumgebung, wobei das Verfahren Folgendes umfasst:
Sammeln von Gerätedaten von einer Vielzahl von Netzwerkgeräten (25-1, 25-2, 25-3, 25-4), die der Geräteverwaltungseinheit zugewiesen sind, durch jede Geräteverwaltungseinheit (26-1, 26-2) einer Vielzahl von Geräteverwaltungseinheiten (26-1, 26-2);
Verwalten der Gerätedaten der Vielzahl von Netzwerkgeräten (25-1, 25-2, 25-3, 25-4) durch die Geräteverwaltungseinheit (26-1, 26-2) gemäß einer für die Geräteverwaltungseinheit (26-1, 26-2) spezifischen Verwaltungsrichtlinie, wobei die Verwaltungsrichtlinie eine oder mehrere von der einen oder den mehreren Geräteverwaltungseinheiten (26-1, 26-2) zu ergreifende Maßnahmen basierend auf Gerätestatusinformationen angibt, die in den Gerätedaten beinhaltet sind, die durch eine Geräteverwaltungseinheit (26-1, 26-2) von der entsprechenden Vielzahl von Netzwerkgeräten gesammelt werden, wobei die Gerätestatusinformationen eines spezifischen Netzwerkgeräts (25-1, 25-2, 25-3, 25-4) einen aktuellen Gerätestatus des spezifischen Netzwerkgeräts (25-1, 25-2, 25-3, 25-4) angeben;
Verwalten und Erhalten von persistenten Daten, die in der Netzwerkumgebung gesammelt werden, durch eine Kernverwaltungseinheit (27), wobei die persistenten Daten die Gerätedaten beinhalten, die durch die Geräteverwaltungseinheiten (26-1, 26-2) gesammelt werden.
Verwalten und Erhalten für jede Geräteverwaltungseinheit (26-1, 26-2) aus den Geräteverwaltungseinheiten (26-1, 26-2) der für die Geräteverwaltungseinheit (26-1, 26-2) spezifischen Verwaltungsrichtlinie durch die Kernverwaltungseinheit (27), einschließlich Registrieren der Verwaltungsrichtlinie der Geräteverwaltungseinheit (26-1, 26-2) in einer Konfigurationsdatenbank und Übermitteln der Verwaltungsrichtlinie an die Geräteverwaltungseinheit (26-1, 26-2) durch die Kernverwaltungseinheit (27), und
Registrieren der Verwaltungsrichtlinie jeder Geräteverwaltungseinheit (26-1, 26-2) in einer Konfigurationsdatenbank (27a) durch Speichern eines Links oder einer Hinweisadresse zu Verwaltungsrichtlinieninformationen, die in der Konfigurationsdatenbank (27a) gespeichert sind, oder in einem Speicherteil der Kernverwaltungseinheit (27) durch die Kernverwaltungseinheit (27).

11. Verfahren nach Anspruch 10, ferner umfassend:
Übermitteln der gesammelten Gerätedaten durch jede Geräteverwaltungseinheit (26-1, 26-2) an die Kernverwaltungseinheit (27), wenn die Kernverwaltungseinheit (27) verfügbar ist, und Sammeln von Gerätedaten und Zwischenspeichern der gesammelten Gerätedaten in dem Speicherteil der Geräteverwaltungseinheit (26-1, 26-2), wenn die Kernverwaltungseinheit (27) nicht verfügbar ist.

12. Verfahren nach Anspruch 10, ferner umfassend:
Registrieren der Verwaltungsrichtlinie der Geräteverwaltungseinheit (26-1, 26-2) durch jede Geräteverwaltungseinheit (26-1, 26-2) und
neu Synchronisieren der Verwaltungsrichtlinie, die in der Geräteverwaltungseinheit (26-1, 26-2) registriert ist, mit der Verwaltungsrichtlinie, die durch die Kernverwaltungseinheit (27) für die Geräteverwaltungseinheit (26-1, 26-2) erhalten wird, wenn die Kernverwaltungseinheit (27) verfügbar ist.

13. Verfahren nach Anspruch 10, ferner umfassend:
Zwischenspeichern durch jede Geräteverwaltungseinheit (26-1, 26-2) von nur einer neuesten Instanz der Gerätedaten, die durch die Geräteverwaltungseinheit (26-1,26-2) von jeder der Vielzahl von Netzwerkgeräten (25-1, 25-2, 25-3, 25-4) gesammelt werden, die durch die Geräteverwaltungseinheit (26-1, 26-2) verwaltet werden.

14. Verfahren nach Anspruch 10, ferner umfassend:
Registrieren von Code, der von den Netzwerkgeräten (25-1,25-2,25-3,25-4) ausführbar ist und zum Hochladen darauf verfügbar ist, in einem Codespeicher durch die Kernverwaltungseinheit (27).

15. Verfahren nach Anspruch 14, ferner umfassend:
Übertragen von Gerätecodeinformationen, die für jedes Netzwerkgerät (25-1, 25-2, 25-3, 25-4) aus den Netzwerkgeräten (25-1, 25-2, 25-3, 25-4), die durch die erste Geräteverwaltungseinheit (26-1, 26-2) verwaltet werden, Code angeben, der in dem Codespeicher für das Netzwerkgerät (25-1, 25-2, 25-3, 25-4) registriert ist, von der Kernverwaltungseinheit (27) an eine erste Geräteverwaltungseinheit (26-1, 26-2).

## Revendications

1. Système (200) destiné à gérer des données de dispositif de dispositifs se trouvant dans un environnement de réseau, ledit système comprenant :
une ou plusieurs unités de gestion de dispositif (26-1, 26-2), chaque unité de gestion de dispositif (26-1, 26-2) parmi lesdites une ou plusieurs unités de gestion de dispositifs (26-1, 26-2) étant conçues pour recueillir les données de dispositif depuis une pluralité correspondante de dispositifs de réseau (25-1, 25-2, 25-3, 25-4) et pour gérer les données de dispositif des dispositifs de réseau (25-1, 25-2, 25-3, 25-4) en fonction d'une politique de gestion spécifique à l'unité de gestion de dispositif (26-1, 26-2), ladite politique de gestion indiquant une ou plusieurs actions devant être effectuées par chacune desdites une ou plusieurs unités de gestion de dispositif (26-1, 26-2) en fonction d'informations de statut de dispositif comprises dans les données de dispositif recueillies par une unité de gestion de dispositif (26-1, 26-2) depuis la pluralité correspondante de dispositifs de réseau (25-1, 25-2, 25-3, 25-4), les informations de statut de dispositif d'un dispositif de réseau spécifique (25-1, 25-2, 25-3, 25-4) indiquant un statut de dispositif actuel du dispositif de réseau spécifique (25-1, 25-2, 25-3, 25-4) ;
une unité centrale de gestion (27) conçue pour gérer et conserver des données rémanentes recueillies dans l'environnement de réseau, les données rémanentes comprenant les données de dispositif recueillies par lesdites une ou plusieurs unités de gestion de dispositif (26-1, 26-2),
l'unité centrale de gestion (27) étant conçue pour gérer pour chaque dite unité de gestion de dispositif (26-1, 26-2) parmi lesdites une ou plusieurs unités de gestion de dispositif (26-1, 26-2), la politique de gestion spécifique à l'unité de gestion de dispositif (26-1, 26-2), et pour communiquer la politique de gestion à l'unité de gestion de dispositif (26-1, 26-2), et
l'unité centrale de gestion (27) étant conçue pour enregistrer la politique de gestion de chaque unité de gestion de dispositif (26-1, 26-2) dans une base de données de configurations (27a) en stockant un lien ou pointeur vers les informations de politique de gestion stockées dans la base de données de configurations (27a) ou une partie de stockage de l'unité centrale de gestion (27).

2. Système (200) selon la revendication 1, dans lequel
chaque unité de gestion de dispositif parmi lesdites une ou plusieurs unités de gestion de dispositif (26-1, 26-2) comprend une partie de stockage, et dans lequel
l'unité de gestion de dispositif (26-1, 26-2) communique les données de dispositif recueillies à l'unité centrale de gestion (22) lorsque l'unité centrale de gestion (27) est disponible, et lorsque l'unité centrale de gestion (27) n'est pas disponible, l'unité de gestion de dispositif (26-1, 26-2) continue à fonctionner pour recueillir des données de dispositif et mettre en mémoire cache les données de dispositif recueillies dans la partie de stockage de l'unité de gestion de dispositif (26-1, 26-2).

3. Système (200) selon la revendication 1, dans lequel
chaque unité de gestion de dispositif (26-1, 26-2) parmi lesdites une ou plusieurs unités de gestion de dispositif (26-1, 26-2) comprend une partie de stockage de configuration locale enregistrant la politique de gestion de l'unité de gestion de dispositif (26-1, 26-2), et lorsque l'unité centrale de gestion (27) est disponible après avoir été indisponible, l'unité de gestion de dispositif (26-1, 26-2) resynchronise la politique de gestion enregistrée dans la partie de stockage de configuration locale de l'unité de gestion de dispositif (26-1, 26-2) avec la politique de gestion conservée par l'unité centrale de gestion (27) pour l'unité de gestion de dispositif (26-1, 26-2).

4. Système (200) selon la revendication 1, dans lequel chaque unité de gestion de dispositif parmi lesdites une ou plusieurs unités de gestion de dispositif (26-1, 26-2) comprend une partie de stockage et l'unité de gestion de dispositif (26-1, 26-2) met en mémoire cache dans la partie de stockage, pour chacun de la pluralité de dispositifs de réseau (25-1, 25-2, 25-3, 25-4) gérés par l'unité de gestion de dispositif (26-1, 26-2), seulement le cas le plus récent des données de dispositif recueillies par l'unité de gestion de dispositif (26-1, 26-2) depuis le dispositif de réseau (25-1, 25-2, 25-3, 25-4).

5. Système (200) selon la revendication 1, dans lequel l'unité centrale de gestion (27) comprend une interface utilisateur administrative qui permet le réglage, pour une quelconque unité de gestion de dispositif (26-1, 26-2) parmi lesdites une ou plusieurs unités de gestion de dispositif (26-1, 26-2), d'une configuration de l'unité de gestion de dispositif (26-1, 26-2).

6. Système (200) selon la revendication 1, dans lequel l'unité centrale de gestion (27) comprend un référentiel de codes qui enregistre un code exécutable par un téléchargement vers les dispositifs de réseau (25-1, 25-2, 25-3, 25-4), et disponible pour celui-ci.

7. Système (200) selon la revendication 6, dans lequel
chaque unité de gestion de dispositif (26-1, 26-2) parmi lesdites une ou plusieurs unités de gestion de dispositif (26-1, 26-2) reçoit depuis l'unité centrale de gestion (27), des informations de code de dispositif indiquant pour chaque dispositif de réseau (25-1, 25-2, 25-3, 25-4) parmi les dispositifs de réseau (25-1, 25-2, 25-3, 25-4) gérés par le code d'unité de gestion de dispositif enregistré dans le référentiel de codes pour le dispositif de réseau (25-1, 25-2, 25-3, 25-4).

8. Système (200) selon la revendication 1, dans lequel l'unité de gestion de dispositif (26-1, 26-2) interroge la pluralité correspondante de dispositifs de réseau (25-1, 25-2, 25-3, 25-4) pour obtenir les données de dispositif depuis les dispositifs de réseau 25-1, 25-2, 25-3, 25-4).

9. Système (200) selon la revendication 1, dans lequel l'unité de gestion de dispositif (26-1, 26-2) découvre la pluralité correspondante de dispositifs de réseau (25-1, 25-2, 25-3, 25-4) et obtient les données de dispositif depuis les dispositifs de réseau (25-1, 25-2, 25-3, 25-4).

10. Procédé de gestion de dispositifs dans un environnement de réseau, ledit procédé comprenant :
le recueil, par chaque unité de gestion de dispositif (26-1, 26-2) d'une pluralité d'unités de gestion de dispositif (26-1, 26-2), de données de dispositif depuis une pluralité de dispositifs de réseau (25-1, 25-2, 25-3, 25-4) attribués à l'unité de gestion de dispositif ;
la gestion, par l'unité de gestion de dispositif (26-1, 26-2), des données de dispositif de la pluralité de dispositifs de réseau (25-1, 25-2, 25-3, 25-4) en fonction d'une politique de gestion spécifique à l'unité de gestion de dispositif (26-1, 26-2), ladite politique de gestion indiquant une ou plusieurs actions devant être effectuées par chacune desdites une ou plusieurs unités de gestion de dispositif (26-1, 26-2) en fonction d'informations de statut de dispositif comprises dans les données de dispositif recueillies par une unité de gestion de dispositif (26-1, 26-2) depuis la pluralité correspondante de dispositifs de réseau, les informations de statut de dispositif d'un dispositif de réseau spécifique (25-1, 25-2, 25-3, 25-4) indiquant un statut de dispositif actuel du dispositif de réseau spécifique (25-1, 25-2, 25-3, 25-4) ;
la gestion et la conservation, par une unité centrale de gestion (27), de données rémanentes recueillies dans l'environnement de réseau, les données rémanentes comprenant les données de dispositif recueillies par les unités de gestion de dispositif (26-1, 26-2) ;
la gestion et la conservation, par l'unité centrale de gestion (27), pour chaque dite unité de gestion de dispositif (26-1, 26-2) parmi les unités de gestion de dispositif (26-1, 26-2), de la politique de gestion spécifique à l'unité de gestion de dispositif (26-1, 26-2), comprenant l'enregistrement de la politique de gestion de l'unité de gestion de dispositif (26-1, 26-2) dans une base de données de configurations, et la communication, par l'unité centrale de gestion (27), de la politique de gestion à l'unité de gestion de dispositif (26-1, 26-2), et
l'enregistrement, par l'unité centrale de gestion (27), de la politique de gestion de chaque unité de gestion de dispositif (26-1, 26-2) dans une base de données de configurations (27a) en stockant un lien ou pointeur vers les informations de politique de gestion stockées dans la base de données de configurations (27a) ou une partie de stockage de l'unité centrale de gestion (27).

11. Procédé selon la revendication 10, comprenant en outre :
la communication, par chaque unité de gestion de dispositif (26-1, 26-2), des données de dispositif recueillies à l'unité centrale de gestion (27), lorsque l'unité centrale de gestion (27) est disponible, et
le recueil de données de dispositif et la mise en mémoire cache des données de dispositif recueillies dans la partie de stockage de l'unité de gestion de dispositif (26-1, 26-2), lorsque l'unité centrale de gestion (27) n'est pas disponible.

12. Procédé selon la revendication 10, comprenant en outre :
l'enregistrement, par chaque unité de gestion de dispositif (26-1, 26-2), de la politique de gestion de l'unité de gestion de dispositif (26-1, 26-2), et
la resynchronisation de la politique de gestion enregistrée dans l'unité de gestion de dispositif (26-1, 26-2) avec la politique de gestion conservée par l'unité centrale de gestion (27) pour l'unité de gestion de dispositif (26-1, 26-2) lorsque l'unité centrale de gestion (27) est disponible.

13. Procédé selon la revendication 10, comprenant en outre :
la mise en mémoire cache, par chaque unité de gestion de dispositif (26-1, 26-2), de seulement le cas le plus récent des données de dispositif recueillies par l'unité de gestion de dispositif (26-1, 26-2) depuis chacun de la pluralité de dispositifs de réseau (25-1, 25-2, 25-3, 25-4) gérés par l'unité de gestion de dispositif (26-1, 26-2).

14. Procédé selon la revendication 10, comprenant en outre :
l'enregistrement dans un référentiel de codes, par l'unité centrale de gestion (27), d'un code exécutable par un téléchargement vers les dispositifs de réseau (25-1, 25-2, 25-3, 25-4) et disponible pour celui-ci.

15. Procédé selon la revendication 14, comprenant en outre :
la transmission, depuis l'unité centrale de gestion (27) à une première unité de gestion de dispositif (26-1, 26-2), d'informations de code de dispositif indiquant pour chaque dispositif de réseau (25-1, 25-2, 25-3, 25-4) parmi les dispositifs de réseau (25-1, 25-2, 25-3, 25-4) gérés par la première unité de gestion de dispositif (26-1, 26-2), un code enregistré dans le référentiel de codes pour le dispositif de réseau (25-1, 25-2, 25-3, 25-4).
